# EUROPEAN PATENT APPLICATION

(11) **EP 2 278 794 A2**
(43) Date of publication of application: **26.01.2011**
(21) Application number: 10168751.5
(22) Date of filing: 07.07.2010
(51) Int. Cl.: H04N 5/44, H04N 5/445

(54) **Mobile terminal and broadcast controlling method thereof**

(30) Priority: 14.07.2009 KR 20090063956
(71) Applicant: LG Electronics, Seoul, 150-721 (KR)
(72) Inventor: Lee, Won Jong, 153-801, Seoul (KR); Kim, Eui Soon, 153-801, Seoul (KR); Yoon, Sung Won, 153-801, Seoul (KR); Kim, So Yeon, 153-801, Seoul (KR); Kim, Bo Soo, 153-801, Seoul (KR)
(74) Representative: Cabinet Plasseraud

(57) **Abstract**

A mobile terminal including a wireless communication unit configured to receive a first broadcast content, an output unit configured to output the received first broadcast content, and a control unit configured to determine that a viewing of the first broadcast content has not been completed, to generate an uncompleted viewing list including at least an identification information identifying the first broadcast content and viewing uncompleted section information identifying a section of the first broadcast content that has not been viewed, and to control the output unit to display the uncompleted viewing list.

## Description

### BACKGROUND OF THE INVENTION

### Field of the Invention

The present invention relates to a mobile terminal and a corresponding broadcast control method for viewing uncompleted broadcast content.

### Discussion of the Related Art

Generally, terminals can be classified into mobile/portable terminals and stationary terminals. Further, the mobile terminals can be classified into handheld terminals and vehicle mount terminals. Mobile terminals also provide many additional functions besides the basic call function and now operate as a multimedia player, For example, users can now capture photos, listen to music, surf the Internet, play games, receive broadcast programs, etc. using their mobile terminal.

Further, a related art broadcast receiving terminal provides limited broadcast organization information to help the user view a desired broadcast. For example, the user can check a broadcast time of each broadcast program and select a desired broadcast program using the broadcast organization information. However, the user is given little flexibility in viewing broadcasts.

### SUMMARY OF THE INVENTION

Accordingly, one object of the present invention is to address the above-noted and other problems.

Another object of the present invention is to provide a mobile terminal and corresponding broadcast controlling method that allows the user to view an list of programs that the user has not completed viewing (hereinafter referred to as "uncompleted viewing list").

Yet another object of the present invention is to provide a mobile terminal and corresponding broadcast controlling method that allows the user to view a non-viewed part of broadcast program the user hasn't viewed yet.

To achieve these objects and other advantages and in accordance with the purpose of the invention, as embodied and broadly described herein, the present invention provides in one aspect a mobile terminal including a wireless communication unit configured to receive a first broadcast content, an output unit configured to output the received first broadcast content, and a control unit configured to determine that a viewing of the first broadcast content has not been completed, to generate an uncompleted viewing list including at least an identification information identifying the first broadcast content and viewing uncompleted section information identifying a section of the first broadcast content that has not been viewed, and to control the output unit to display the uncompleted viewing list.

In another aspect, the present invention provides a method of controlling a mobile terminal, and which includes receiving, via a wireless communication unit on the mobile terminal, a first broadcast content; outputting, via an output unit on the mobile terminal, the received first broadcast content; determining, via a control unit on the mobile terminal, that a viewing of the first broadcast content has not been completed; generating, via the control unit, an uncompleted viewing list including at least an identification information identifying the first broadcast content and viewing uncompleted section information identifying a section of the first broadcast content that has not been viewed; and displaying, via the output unit, the uncompleted viewing list.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile terminal according to one embodiment of the present invention;

FIG. 2A is a front perspective diagram of a mobile terminal according to one embodiment of the present invention;

FIG. 2B is a rear perspective diagram of a mobile terminal according to one embodiment of the present invention;

FIGs. 3A and 3B are perspective diagrams of a mobile terminal according to an embodiment of the present invention;

FIG. 4 is a flowchart illustrating a broadcast controlling method of a mobile terminal according to an embodiment of the present invention;

FIGs. 5A and 5B are diagrams of screen configurations for setting conditions of generating an uncompleted viewing list according to an embodiment of the present invention;

FIGs. 6A to 6D are diagrams of screen configurations for selecting whether to generate an uncompleted viewing list if an output of a real-time broadcast content is interrupted according to an embodiment of the present invention;

FIGs. 7A to 7C are diagrams of screen configurations for selecting whether to generate an uncompleted viewing list if an output of a streaming broadcast content is interrupted according to an embodiment of the present invention;

FIGs. 8A and 8B are diagrams of screen configurations for selecting whether to generate an uncompleted viewing list if a download of a non-streaming broadcast content is interrupted according to an embodiment of the present invention;

FiGs. 9A to 9C are diagrams of screen configurations of an uncompleted viewing list containing uncompleted real-time viewing broadcast contents according to an embodiment of the present invention;

FIGs. 10A and 10B are diagrams of screen configurations of an uncompleted viewing list containing uncompleted viewed streaming/non-streaming broadcast contents according to an embodiment of the present invention;

FIGs. 11A to 11D are diagrams of screen configurations of a process for searching uncompleted viewed real-time broadcast content using a real-time broadcast content uncompleted viewing list according to an embodiment of the present invention;

FIGs. 12A to 12C are diagrams of screen configurations for displaying a search result of uncompleted viewed real-time broadcast contents according to an embodiment of the present invention;

FIGs. 13A and 13B are diagrams of screen configurations for outputting a search-successful uncompleted viewed real-time broadcast content according to an embodiment of the present invention;

FIGs. 14A to 14C are diagrams of screen configurations of a process for searching uncompleted viewed streaming/non-streaming broadcast content using a streaming/non-streaming broadcast content uncompleted viewing list according to an embodiment of the present invention;

FIGs. 15A to 15C are diagrams of screen configurations for displaying a search result of an uncompleted viewed streaming/non-streaming broadcast content according to an embodiment of the present invention;

FIGs. 16A to 16C are diagrams of screen configurations for outputting a search-successful uncompleted viewed streaming/non-streaming broadcast content according to an embodiment of the present invention;

FIGs. 17A to 17C are diagrams of screen configurations of searching uncompleted viewed broadcast content using an IPTV terminal according to an embodiment of the present invention;

FIGs. 18A and 18B are diagrams of screen configurations for sharing an uncompleted viewing list of a mobile terminal with an IPTV terminal according to an embodiment of the present invention; and

FIGs. 19A and 19B are diagrams of screen configurations for sharing an uncompleted viewing list of an IPTV terminal with a mobile terminal according to an embodiment of the present invention.

### DETAILED DESCRIPTION OF THE INVENTION

Reference will now be made in detail to the preferred embodiments of the present invention, examples of which are illustrated in the accompanying drawings.

In addition, mobile terminals described in this disclosure can include a mobile phone, a smart phone, a laptop computer, a digital broadcast terminal, a PDA (personal digital assistants), a PMP (portable multimedia player), a navigation system and the like. A stationary terminal may also be applicable.

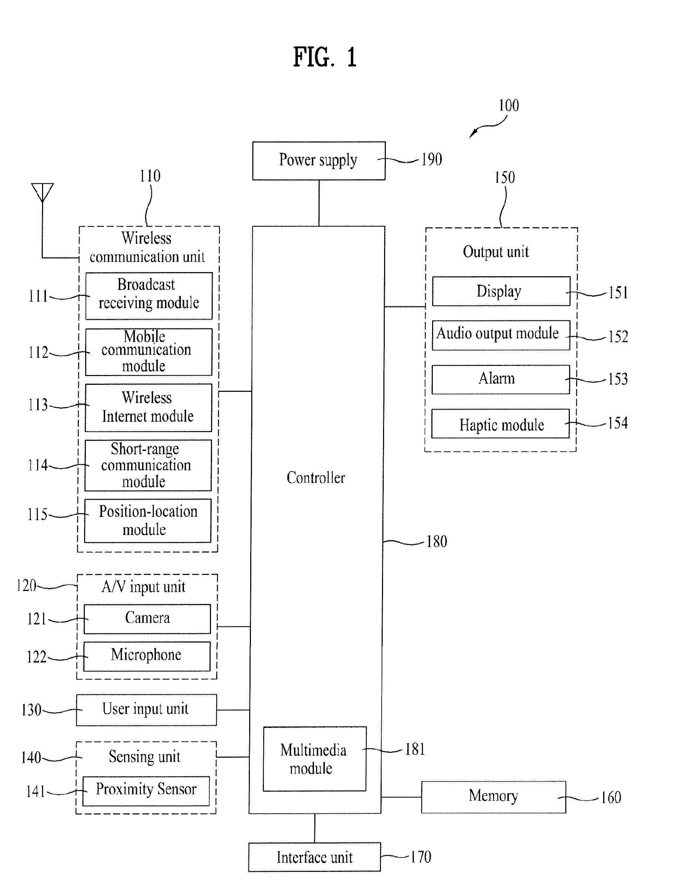

FIG. 1 is a block diagram of a mobile terminal 100 according to one embodiment of the present invention. Referring to FIG. 1, the mobile terminal 100 includes a wireless communication unit 110, an AN (audio/video) input unit 120, a user input unit 130, a sensing unit 140, an output unit 150, a memory 160, an interface unit 170, a controller 180, a power supply 190 and the like. FIG. 1 shows the mobile terminal 100 having various components, but implementing all of the illustrated components is not a requirement. Greater or fewer components may alternatively be implemented.

Further, the wireless communication unit 110 includes one or more components which permits wireless communication between the mobile terminal 100 and a wireless communication system or network within which the mobile terminal 100 is located. For instance, the wireless communication unit 110 in the embodiment in FIG. 1 includes a broadcast receiving module 111, a mobile communication module 112, a wireless Internet module 113, a short-range communication module 114, a position-location module 115 and the like.

Further, the broadcast receiving module 111 receives a broadcast signal and/or broadcast associated information from an external broadcast managing server via a broadcast channel. The broadcast channel may include a satellite channel and a terrestrial channel. Also, the broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. The broadcast signal may further include a broadcast signal combined with a TV or radio broadcast signal.

In addition, the broadcast associated information includes information associated with a broadcast channel, a broadcast program, a broadcast service provider, etc. And, the broadcast associated information can be provided via a mobile communication network. In this instance, the broadcast associated information can be received by the mobile communication module 112. Further, the broadcast associated information can be implemented in various forms. For instance, broadcast associated information may include an electronic program guide (EPG) of the digital multimedia broadcasting (DMB) system and an electronic service guide (ESG) of the digital video broadcast-handheld (DVB-H) system.

In addition, the broadcast receiving module 111 can be configured to receive broadcast signals transmitted from various types of broadcast systems. In a non-limiting example, such broadcasting systems include the digital multimedia broadcasting-terrestrial (DMB-T) system, the digital multimedia broadcasting-satellite (DMB-S) system, the digital video broadcast-handheld (DVB-H) system, the data broadcasting system known as media forward link only (MediaFLO®) and the integrated services digital broadcast-terrestrial (ISDB-T) system. The broadcast receiving module 111 can also be configured to be suitable for other broadcasting systems as well as the above-explained digital broadcasting systems.

Further, the broadcast signal and/or broadcast associated information received by the broadcast receiving module 111 may be stored in a suitable device such as a memory 160. Also, the mobile communication module 112 transmits/receives wireless signals to/from one or more network entities (e.g., base station, external terminal, server, etc.). Such wireless signals may represent audio, video, and data according to text/multimedia message transceivings, among others.

In addition, the wireless Internet module 113 supports Internet access for the mobile terminal 100, and may be internally or externally coupled to the mobile terminal 100. The wireless Internet technology can also include WLAN (Wireless LAN) (Wi-Fi), Wibro (Wireless broadband), Wimax (World Interoperability for Microwave Access), HSDPA(High Speed Downlink Packet Access), etc.

Further, the short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few. Also, the position-location module 115 identifies or otherwise obtains the location of the mobile terminal 100, and may be implemented with a global positioning system (GPS) module.

Referring to FIG. 1, the audio/video (AN) input unit 120 is configured to provide audio or video signal input to the mobile terminal 100. As shown in this embodiment, the AN input unit 120 includes a camera 121 and a microphone 122. The camera 121 receives and processes image frames of still pictures or video, which are obtained by an image sensor in a video call mode or a photographing mode. Also, the processed image frames can be displayed on the display 151.

The image frames processed by the camera 121 can also be stored in the memory 160 or can be externally transmitted via the wireless communication unit 110. Optionally, at least two cameras 121 can be provided to the mobile terminal 100. Further, the microphone 122 receives an external audio signal while the portable device is in a particular mode, such as phone call mode, recording mode and voice recognition. The audio signal is also processed and converted into electric audio data, and the processed audio data is transformed into a format transmittable to a mobile communication base station via the mobile communication module 112 for a call mode. The microphone 122 also can include assorted noise removing algorithms to remove noise generated in the course of receiving the external audio signal.

Further, the user input unit 130 generates input data responsive to user manipulation of an associated input device or devices. Examples of such devices include a keypad, a dome switch, a touchpad (e.g., static pressure/capacitance), a jog wheel, a jog switch, etc. In addition, the sensing unit 140 provides sensing signals for controlling operations of the mobile terminal 100 using status measurements of various aspects of the mobile terminal. For instance, the sensing unit 140 can detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100, etc.

As an example, when the mobile terminal 100 is configured as a slide-type mobile terminal, the sensing unit 140 can sense whether a sliding portion of the mobile terminal is opened or closed. Other examples include the sensing unit 140 sensing the presence or absence of power provided by the power supply 190, the presence or absence of a coupling or other connection between the interface unit 170 and an external device. In FIG. 1, the sensing unit 140 also includes a proximity sensor 141.

Further, the output unit 150 generates outputs relevant to the senses of sight, hearing, touch and the like. The output unit 150 also includes the display 151, an audio output module 152, an alarm unit 153, a haptic module 154 and the like. In addition, the display 151 is implemented to visually display (output) information associated with the mobile terminal 100. For instance, if the mobile terminal is operating in a phone call mode, the display 151 can provide the user interface (UI) or graphical user interface (GUI), which includes information associated with placing, conducting, and terminating a phone call. As another example, if the mobile terminal 100 is in a video call mode or a photographing mode, the display 151 may additionally or alternatively display images which are associated with these modes, the UI or the GUI.

In addition, the display 151 may be implemented using display technologies including, for example, a liquid crystal display (LCD), a thin film transistor-liquid crystal display (TFT-LCD), an organic light-emitting diode display (OLED), a flexible display and a three-dimensional display. The mobile terminal 100 may also include one or more of such displays.

Some of the above displays can also be implemented in a transparent or optical transmittive type, which are called transparent displays. A TOLED (transparent OLED) or the like is an example of a transparent display. A rear configuration of the display 151 can also be implemented in the optical transmittive type as well. In this configuration, the user can see an object in rear of a terminal body via the area occupied by the display 151 of the terminal body.

At least two displays 151 can also be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

When the display 151 and a sensor for detecting a touch action (hereinafter called 'touch sensor') configures a mutual layer structure (hereinafter called 'touchscreen'), the display 151 can be used as an input device as well as an output device. In this instance, the touch sensor can be configured as a touch film, a touch sheet, a touchpad or the like.

The touch sensor can also be configured to convert a pressure applied to a specific portion of the display 151 or a variation of a capacitance generated from a specific portion of the display 151 to an electric input signal. Moreover, the touch sensor can detect a pressure of a touch as well as a touched position or size.

Also, if a touch input is made to the touch sensor, signals corresponding to the touch are transferred to a touch controller. The touch controller then processes the signals and transfers the processed signals to the controller 180. Therefore, the controller 180 can know whether a prescribed portion of the display 151 is touched.

Referring to FIG. 1, the proximity sensor 141 can be provided to an internal area of the mobile terminal 100 enclosed by the touchscreen or around the touchscreen. Further, the proximity sensor 141 is a sensor that detects a presence or non-presence of an object approaching a prescribed detecting surface or an object existing around the proximity sensor using an electromagnetic field strength or infrared ray without mechanical contact. Hence, the proximity sensor 141 has a durability longer than that of a contact type sensor and also has a utility wider than that of the contact type sensor.

The proximity sensor 141 can also include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. When the touchscreen includes the electrostatic capacity proximity sensor, the sensor is configured to detect the proximity of a pointer using a variation of electric field according to the proximity of the pointer. In this instance, the touchscreen (touch sensor) can be classified as the proximity sensor 141.

In the following description, for clarity, an action that a pointer approaches without contacting the touchscreen is named a 'proximity touch. Also, an action that a pointer actually touches the touchscreen is named 'contact touch'. Further, the meaning of the position on the touchscreen proximity-touched by the pointer means the position of the pointer which substantially vertically opposes the touchscreen when the pointer performs the proximity touch.

The proximity sensor 141 also detects a proximity touch and a proximity touch pattern (e.g., a proximity touch distance, a proximity touch duration, a proximity touch position, a proximity touch shift state, etc.). In addition, information corresponding to the detected proximity touch action and the detected proximity touch pattern can be output to the touchscreen.

Further, the audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., a call received, a message received, etc.). The audio output module 152 can also be implemented using one or more speakers, buzzers, other audio producing devices, and combinations thereof.

In addition, the alarm 153 can output a signal for announcing the occurrence of a particular event associated with the mobile terminal 100. Typical events include a call received event, a message received event and a touch input received event. The alarm 153 can also output a signal for announcing the event occurrence using vibration as well as video or audio signal. The video or audio signal can also be output via the display 151 or the audio output unit 152. Hence, the display 151 or the audio output module 152 can be regarded as a part of the alarm 153.

Further, the haptic module 154 generates various tactile effects that can be sensed by the user. Vibration is a representative one of the tactile effects generated by the haptic module 154. The strength and pattern of the vibration generated by the haptic module 154 are also controllable. For instance, different vibrations can be output in a manner of being synthesized together or can be output in sequence.

The haptic module 154 can also generate various tactile effects as well as vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can also be implemented to enable the user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

In addition, the memory 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. A recent use history or a cumulative use frequency of each data (e.g., use frequency for each phonebook, each message or each multimedia) can also be stored in the memory 160. Moreover, data for various patterns of vibration and/or sound output for a touch input to the touchscreen can be stored in the memory 160.

The memory 160 may also be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. In addition, the mobile terminal 100 can operate in association with a web storage for performing a storage function of the memory 160 on the Internet.

The interface unit 170 can also couple the mobile terminal 100 with external devices. Further, the interface unit 170 receives data from the external devices or is supplied with the power and then transfers the data or power to the respective elements of the mobile terminal 100 or enables data within the mobile terminal 100 to be transferred to the external devices. The interface unit 170 may also be configured using a wired/wireless headset port, an external charger port, a wired/wireless data port, a memory card port, a port for coupling to a device having an identity module, audio input/output ports, video input/output ports, an earphone port and/or the like.

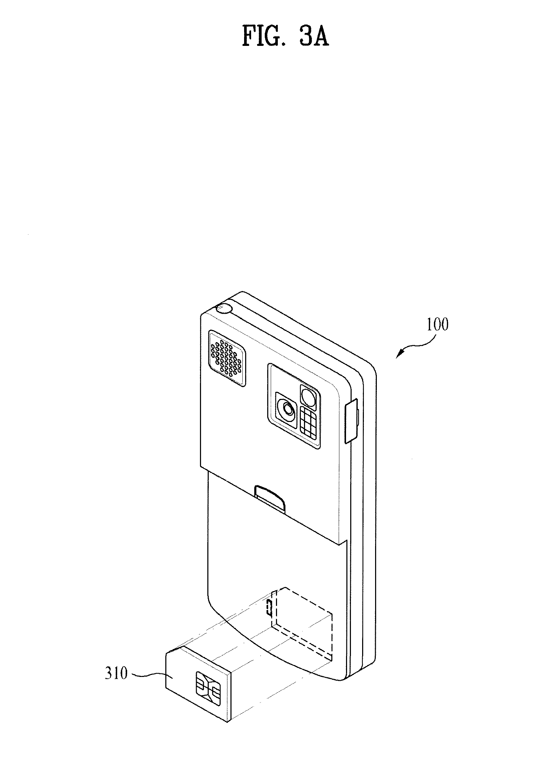

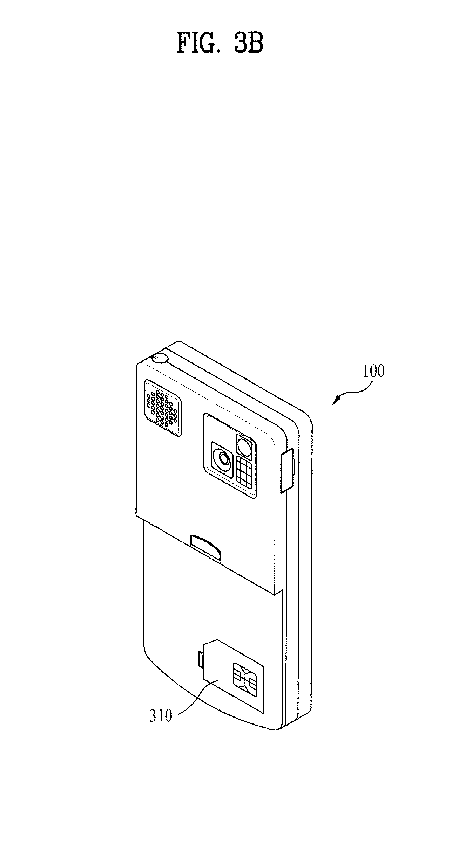

The identity module is a chip for storing various kinds of information for authenticating a use authority of the mobile terminal 100 and can include the user Identify Module (UIM), a Subscriber Identify Module (SIM), a Universal Subscriber Identity Module (USIM) and/or the like. A device having the identity module (hereinafter called 'identity device') can also be manufactured as a smart card. Therefore, the identity device is connectible to the mobile terminal 100 via the corresponding port. FIGs. 3A and 3B illustrate an identity device, which will be described in more detail later.

Also, when the mobile terminal 110 is connected to an external cradle, the interface unit 170 becomes a passage for supplying the mobile terminal 100 with a power from the cradle or a passage for delivering various command signals input from the cradle by the user to the mobile terminal 100. Each of the various command signals input from the cradle or the power can also operate as a signal enabling the mobile terminal 100 to recognize that it is correctly loaded in the cradle.

Further, the controller 180 controls the overall operations of the mobile terminal 100. For example, the controller 180 performs the control and processing associated with voice calls, data communications, video calls, etc. In the embodiment of FIG. 1, the controller 180 also includes a multimedia module 181 that provides multimedia playback. The multimedia module 181 may be configured as part of the controller 180, or implemented as a separate component.

Moreover, the controller 180 can perform a pattern recognizing process for recognizing a writing input and a picture drawing input performed on the touchscreen as characters or images, respectively. In addition, the power supply 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules such as procedures and functions, each of which perform one or more of the functions and operations described herein. The software codes can be implemented with a software application written in any suitable programming language and may be stored in memory such as the memory 160, and executed by a controller or processor, such as the controller 180.

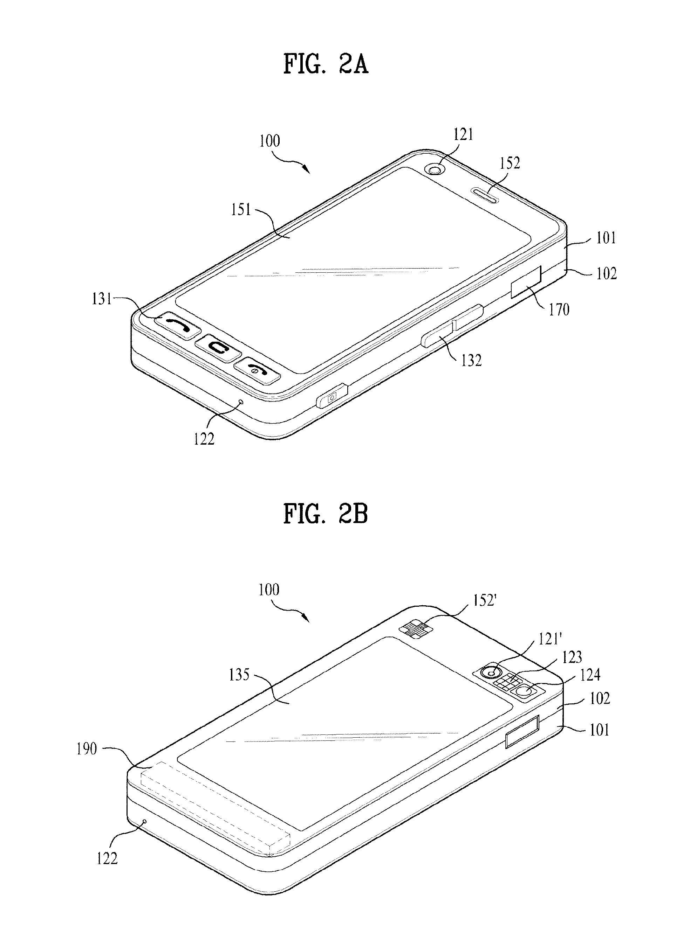

Next, FIG. 2A is a front perspective diagram of a mobile terminal according to an embodiment of the present invention. Further, the mobile terminal 100 shown in the drawing has a bar type terminal body, however, the mobile terminal 100 may be implemented in a variety of different configurations. Examples of such configurations include folder-type, slide-type, rotational-type, swing-type and combinations thereof. For clarity, following description will primarily relate to a bar-type mobile terminal 100. However such teachings apply equally to other types of mobile terminals.

Referring to FIG. 2A, the mobile terminal 100 includes a case (casing, housing, cover, etc.) configuring an exterior thereof. In the present embodiment, the case is divided into a front case 101 and a rear case 102. Various electric/electronic parts are also loaded in a space provided between the front and rear cases 101 and 102. Optionally, at least one middle case can be further provided between the front and rear cases 101 and 102. The cases 101 and 102 are also formed by injection molding of synthetic resin or can be formed of metal substance such as stainless steel (STS), titanium (Ti) or the like for example.

The display 151, the audio output module 152, the camera 121, user input units 130/131 and 132, the microphone 122, the interface 170 and the like can be provided to the terminal body, and more particularly, to the front case 101. Further, in FIG. 2A, the display 151 occupies most of a main face of the front case 101. The audio output module 151 and the camera 121 are also provided to an area adjacent to one of both end portions of the display 151, while the user input unit 131 and the microphone 122 are provided to another area adjacent to the other end portion of the display 151.

The user input unit 132 and the interface 170 are also provided to lateral sides of the front and rear cases 101 and 102. Further, the input unit 130 is manipulated to receive a command for controlling an operation of the terminal 100. In this embodiment, the input unit 130 includes a plurality of manipulating units 131 and 132. Further, the manipulating units 131 and 132 can be named a manipulating portion and may adopt any mechanism of a tactile manner that enables the user to perform a manipulation action by experiencing a tactile feeling.

In addition, content input by the first or second manipulating unit 131 or 132 can be diversely set. For instance, such a command as start, end, scroll and the like can be input to the first manipulating unit 131. Also, a command for a volume adjustment of sound output from the audio output module 152, a command for a switching to a touch recognizing mode of the display 151 or the like can be input to the second manipulating unit 132.

Next, FIG. 2B is a perspective diagram of a backside of the terminal shown in FIG. 2A. Referring to FIG. 2B, a camera 121' is additionally provided to a backside of the terminal body, and more particularly, to the rear case 102. The camera 121' has a photographing direction that is substantially opposite to that of the former camera 121 shown in FIG. 2A and may have pixels differing from those of the former camera 121. Preferably, for instance, the camera 121 has low pixels enough to capture and transmit a picture of user's face for a video call, while the camera 121' has high pixels for capturing a general subject for photography without transmitting the captured subject.

In addition, each of the cameras 121 and 121' can be installed at the terminal body to be rotated or popped up. A flash 123 and a mirror 124 are also provided adjacent to the camera 121'. The flash 123 projects light toward a subject when photographing the subject using the camera 121'. Also, when the user attempts to take a picture of the user (self-photography) using the camera 121', the mirror 124 enables the user to view his or her face reflected by the mirror 124.

An additional audio output module 152' is also provided to the backside of the terminal body, and can implement a stereo function together with the audio output module 152 shown in FIG. 2A and be used for implementation of a speakerphone mode. A broadcast signal receiving antenna 124 is also provided to the lateral side of the terminal body as well as an antenna for communication or the like. In particular, the antenna 124 constructing a portion of the broadcast receiving module 111 shown in FIG. 1 can be retractably provided to the terminal body.

Further, the power supply 190 for supplying a power to the terminal 100 is provided to the terminal body. The power supply 190 can also be configured to be built within the terminal body. Alternatively, the power supply 190 can be configured to be detachably connected to the terminal body.

Also, a touchpad 135 for detecting a touch is additionally provided to the rear case 102. Further, the touchpad 135 can be configured in a light transmittive type like the display 151. In this instance, if the display 151 is configured to output visual information from both faces, it is possible to recognize the visual information via the touchpad 135 as well. The information output from both of the faces can also be entirely controlled by the touchpad 135. Alternatively, a display can be further provided to the touchpad 135 so that a touchscreen can be provided to the rear case 102 as well.

In addition, the touchpad 135 is activated by interconnecting with the display 151 of the front case 101. The touchpad 135 can also be provided in rear of the display 151 in parallel, and can have a size equal to or smaller than that of the display 151.

Next, FIG. 3A and FIG. 3B are perspective diagrams of backside of a mobile terminal according to one embodiment of the present invention, which show an identity device 310 loaded/unloaded in/from the mobile terminal 100. In this instance, the identity device 310 can include a SIM card for example. Referring to FIGs. 3A and 3B, the identity device 310 is detachably provided to the mobile terminal 100. Therefore, an old identity device can be replaced by a new identity device in the mobile terminal 100. The identity device 310 can also be loaded in the mobile terminal 100 in a manner of being connected to the interface unit 170. Alternatively, the identity device 310 can be loaded in the mobile terminal 100 in a manner of being connected to a connector separately provided for the connection to the identity device 310.

The mobile terminal 100 then authenticates an overall use authority of the mobile terminal 100 or can authenticate broadcast viewing/purchase authority using the mobile terminal 100. In addition, a connecting mechanism for connecting the identity device 310 and the mobile terminal 100 together can be provided to any one of a backside, a lateral side and a front side of the mobile terminal 100.

Further, although FIGs. 3A and 3B show the mechanism of loading/unloading the identity device in/from the mobile terminal, the present invention is also applicable to a mobile terminal that does not include a detachable identity device.

Moreover, a mobile terminal mentioned in this disclosure can receive broadcast relevant information randomly or according to the user selection, at a random timing point or periodically. In this instance, the broadcast relevant information is the information used for receiving and outputting (e.g., playing back) a broadcast content. The broadcast relevant information can also be received separately or integratedly according to a broadcast content type. For instance, the broadcast relevant information can include broadcast time (broadcast start and end points) information (for a real-time broadcast content), play time information (for a streaming broadcast content), and download time information (for a non-streaming broadcast content).

An Internet protocol television (IPTV) terminal mentioned in this disclosure corresponds to a terminal that supports an interactive broadcasting service by an Internet protocol. Further, a broadcast content mentioned in this disclosure can include at least one of a real-time broadcast content, a streaming broadcast content and a non-streaming broadcast content. Specifically, the real-time broadcast content is a broadcast content provided to a terminal by a broadcast server in real time. Further, the streaming broadcast content is a broadcast content that is played back by a terminal as soon as it is downloaded to the terminal from a broadcast server. The non-streaming broadcast content is a broadcast content that is downloaded to a terminal from a broadcast server and then played back by the terminal. A broadcast content can also include a broadcast content supported by mobile or Internet broadcasting.

Further, if a broadcast content is supported by the Internet broadcasting, the mobile terminal 100 directly receives the broadcast content from a broadcast server via the Internet or can receive a broadcast content received by an IPTV terminal from the IPTV terminal. For instance, the IPTV terminal and the mobile terminal 100 can be connected to each other or can transceive data with each other using a short range wireless communication system (e.g., Bluetooth, Infrared Data Association (IrDA), Zigbee, Ultra Wide Band (UWB), etc.).

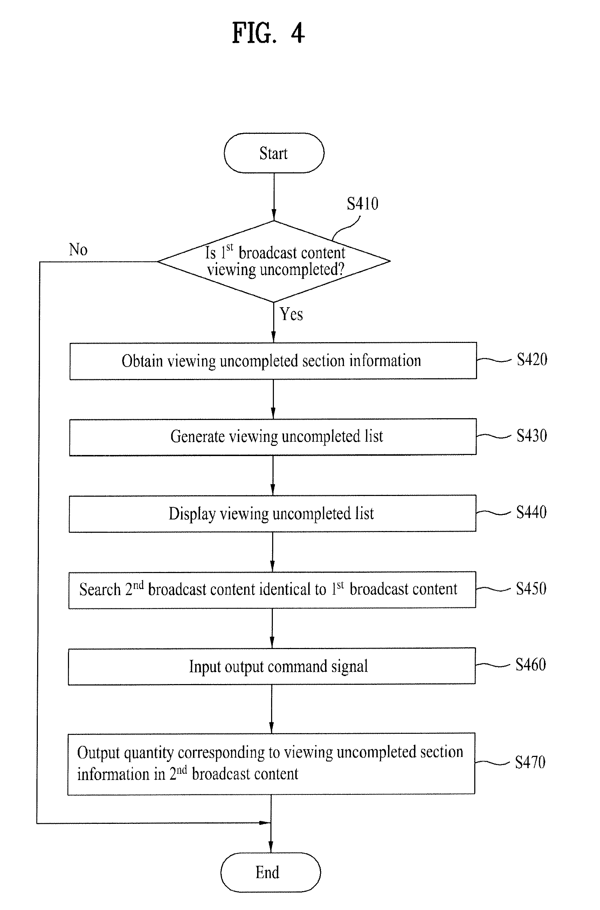

Next, FIG. 4 is a flowchart of a broadcast controlling method of a mobile terminal according to an embodiment of the present invention. FIG. 1 will also be referred to throughout the rest of the description of the present invention. Referring to FIG. 4, the mobile terminal 100 determines whether a viewing of a first broadcast content is completed under the control of the controller 180 (S410).

If the first broadcast content is a real-time broadcast content, the mobile terminal 100 can determine that the viewing is uncompleted in at least one of when an output of the first broadcast content is interrupted while receiving and outputting the first broadcast content before a total broadcast quantity is fully output, when a reception and output of the first broadcast content is initiated after a broadcast start timing point, when an output of the first broadcast content is interrupted due to execution of another application while outputting the first broadcast content, and when the first broadcast content is not outputtable due to failure of execution of a viewing reservation set for the first broadcast content.

Further, if the first broadcast content is a streaming broadcast content, the mobile terminal 100 can determine that the viewing is uncompleted in at least one of when an output of the first broadcast content is interrupted while receiving and outputting the first broadcast content before a total broadcast quantity is fully output, and when a reception and output of the first broadcast content is initiated after a broadcast start timing point.

If the first broadcast content is a non-streaming broadcast content, the mobile terminal 100 can determine that the viewing is uncompleted in at least one of when a download of the first broadcast content is interrupted while downloading the first broadcast content before the download is completed, and when a download of the first broadcast content is interrupted due to execution of another application while downloading the first broadcast content.

Moreover, if the first broadcast content is output over a predetermined portion of a total broadcast quantity (e.g., over 50%) or below a predetermined portion of a total broadcast quantity (e.g., below 20%), the mobile terminal 100 can determine that the viewing is uncompleted.

For instance, using per-broadcast content quantity information included in the broadcast relevant information (e.g., broadcast time information_real-time broadcast content, play time information_streaming broadcast content, download time information_non-streaming broadcast content, etc.), the mobile terminal 100 can determine whether the corresponding broadcast content has been output over or below a predetermined portion of the entire quantity.

Further, the above mentioned output interruption, play interruption or download interruption of the first broadcast content can take place if an interruption command signal is input by the user, a broadcast signal reception becomes poor according to entering a dead spot, or the interruption is inevitable due to a shortage of battery power.

When determining that the viewing of the first broadcast content is uncompleted (Yes in S410), the mobile terminal 100 obtains viewing uncompleted section information on the first broadcast content under the control of the controller 180 (S420). In this instance, the viewing uncompleted section information can include section information on a non-output portion of the first broadcast content.

Moreover, a plurality of viewing uncompleted sections can be generated from the first broadcast content. Further, the viewing uncompleted section information can be obtained for each of a plurality of the generated viewing uncompleted sections. Meanwhile, the controller 180 can use the broadcast relevant information to obtain the viewing uncompleted section information.

When the first broadcast content is a real-time broadcast content, the viewing uncompleted section information can include at least one of section information on a section between a broadcast start point of the first broadcast content and an output start point of the first broadcast content, section information on a section between an output end point of the first broadcast content and a broadcast end point of the first broadcast content, and section information on a section between an output end point (hereinafter named a first output end point) of a first viewing uncompleted section of the first broadcast content and an output start point (hereinafter named a second output start point) of a second viewing uncompleted section (when there are a plurality of viewing uncompleted sections).

For instance, the section information on the section between the broadcast start point of the first broadcast content and the output start point of the first broadcast content can include time information on a time between a time and date (e.g., 2009. 06. 10. A.M. 10:00) of the broadcast start point and a time and date (e.g., 2009. 06. 10. A.M. 10:30) of the output start point or quantity information (e.g., 30 minutes of 1-hour broadcast time or 50% of all) between broadcast start and end points in the whole broadcast quantity.

The section information on the section between the output end point and the broadcast end point can also include time information on a time between a time and date of the output end point and a time and date of the broadcast end point or quantity information on a portion of the whole broadcast quantity between the output end point and the broadcast end point.

Further, the section information on the section between the first output end point and the second output start point can include time information on the time between a time and date of the first output end point and a time and date of the second output start point or quantity information on a portion of the whole broadcast quantity between the first output end point and the second output start point.

Also, when the first broadcast content is a streaming content, the viewing uncompleted section information can include section information on a section between a first point and a second point if a play point is shifted from the first point to the second point in the course of outputting the first broadcast content and section information on a section between a first broadcast content start point and an output start point or between an output end point and a first broadcast content end point.

For instance, the section information on the section between the first and second points can include position and quantity information from a first point to a second point in a whole quantity. For example, the position and quantity information relates to 20% of the whole quantity between a 30% play complete point (i.e., the first point) and a 50% play complete point (i.e., the second point). The section information on the section between the first broadcast content start point and the output end point can include a play complete extent (e.g., 50% play completed or 30 minutes play completed in total play time of 1 hour) up to the output end point of the whole quantity.

When the first broadcast content is a non-streaming broadcast content, and when a download of the first broadcast content is interrupted before completion of the download, the viewing uncompleted section information can include section information on a section between a first broadcast content start point and a download interrupted point or between the download interrupted point and a first broadcast content end point. For instance, the section information on the section between the first broadcast content start point and the download interrupted point can include a download complete extent (e.g., 50% download complete) up to the download interrupted point in the whole quantity.

The viewing uncompleted section information obtained in the obtaining step S420 can also be stored in the memory 160 under the control of the controller 180. Further, the viewing uncompleted section information can contain such identification information of a corresponding broadcast content as a content ID, a content identifier, a unique content number and the like.

Subsequently, the mobile terminal 100 generates an uncompleted viewing list (or a non-viewing list) containing the identification information and the viewing uncompleted section information of the first broadcast content (S430). In this instance, the uncompleted viewing list can contain a uncompleted viewing real-time broadcast content, a play uncompleted streaming broadcast content or a download uncompleted non-streaming broadcast content.

The uncompleted viewing list is also separately configured according to a broadcast content type (e.g., real-time, streaming, non-streaming, etc.) or can be integratedly configured irrespective of the content type. In addition, the uncompleted viewing list can contain other viewing, play and/or download uncompleted contents as well as the first broadcast content.

Further, in the generating step S430, the mobile terminal 100 can generate the uncompleted viewing list if the first broadcast content meets a specific condition. In this instance, the specific condition can be a generation condition of an uncompleted viewing list. For instance, the specific condition can include at least one of a 'specific genre', a 'specific broadcast time zone', a 'specific viewable age', a 'pay/free', and a 'specific broadcast channel'. In addition, the specific condition can include an output interruption type of a broadcast content. Moreover, the specific condition can be set by the user or can be arbitrarily set by the terminal.

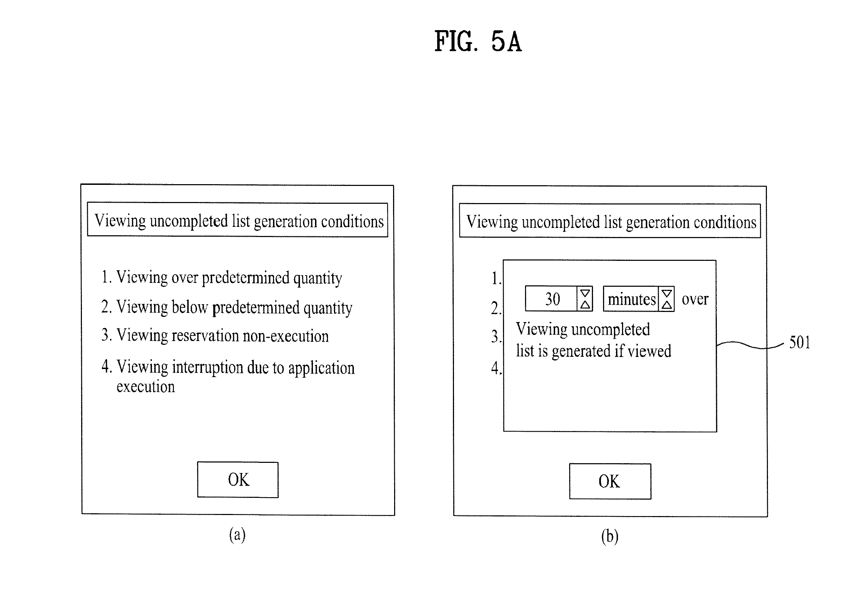

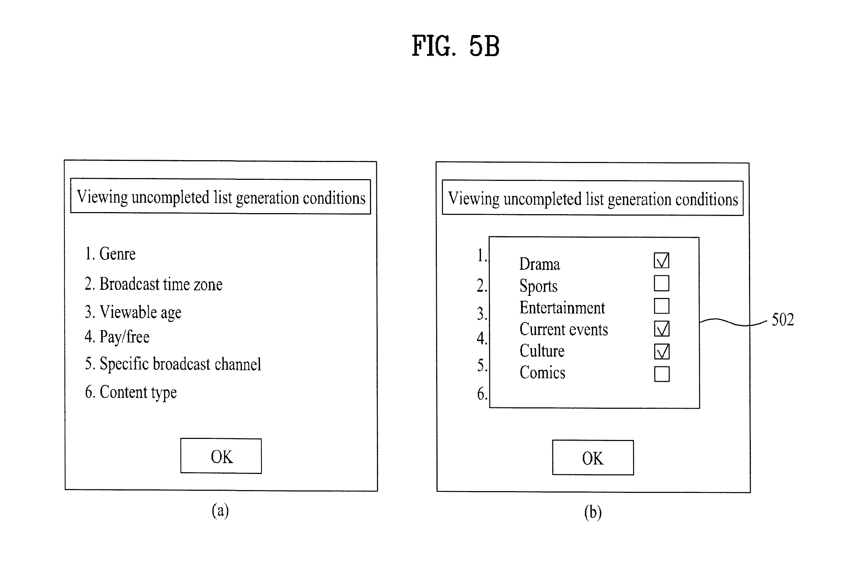

In the following description, a process for setting a generation condition of an uncompleted viewing list is explained in detail with reference to the accompanying drawings. In more detail, FIGS. 5A and 5B are diagrams of screen configurations for setting conditions of generating an uncompleted viewing list according to an embodiment of the present invention.

Referring to FIG. 5A, if the user selects a menu item corresponding to an uncompleted viewing list generation condition via a menu option, the mobile terminal 100 displays a generation condition list corresponding to an output interruption type of a broadcast content as shown in FIG. 5A(a). For instance, the output interruption type of the broadcast content can include one of 'viewing over predetermined quantity', 'viewing below predetermined quantity', 'viewing reservation non-execution', 'viewing interruption due to application execution' and the like.

When the user selects 'viewing over predetermined quantity' in FIG. 5A(a), the mobile terminal 100 sets the uncompleted viewing list to be generated if an output is interrupted after completion of an output of a predetermined quantity of the entire quantity. The mobile terminal 100 then enables the user to select a predetermined quantity (e.g., 30 minutes or 50%) as shown in FIG. 5A(b).

Therefore, after the predetermined quantity selected by the user has been output, and if the output is interrupted, the mobile terminal 100 generates the uncompleted viewing list. Meanwhile, when the user selects 'viewing below predetermined quantity' in FIG. 5A(a), after the corresponding quantity below the predetermined quantity of the entire quantity has been output, and if the output is interrupted, the mobile terminal 100 generates the uncompleted viewing list.

Further, when the user selects 'viewing reservation non-execution' in FIG. 5A(a), and if a viewing reservation of a viewing reserved broadcast content is not executed, the mobile terminal 100 generates the uncompleted viewing list. When the user selects 'viewing interruption due to application execution' in FIG. 5A(a), and if an output is interrupted due to an application execution (e.g., a voice call connection), the mobile terminal 100 generates the uncompleted viewing list.

Subsequently, referring to FIG. 5B, if the user selects a menu item corresponding to an uncompleted viewing list generation condition via a menu option, the mobile terminal displays a generation condition list corresponding to a property of a broadcast content as shown in FIG. 5B(a). For instance, the property of the broadcast content can include at least one of a 'genre', a 'broadcast time zone', a 'viewable age', a 'pay/free', a 'specific broadcast channel', a 'content type' and the like.

If the user selects 'genre' in FIG. 5B(a), the mobile terminal 100 displays a genre list and then enables an uncompleted viewed broadcast content, which is selected from broadcast contents, to be included in the uncompleted viewing list. In this instance, the genre (e.g., drama, current event, or culture) selected from the displayed genre list by the user is set at the broadcast contents as shown in FIG. 5B(b).

Meanwhile, a broadcast content belonging to a broadcast time zone selected by the user, a broadcast content for which a viewable age selected by the user is set, a pay/free broadcast content selected by the user, a broadcast content provided on a broadcast channel selected by the user or a viewing uncompleted broadcast content among broadcast contents corresponding to a content type selected by the user can be included in the uncompleted viewing list by the mobile terminal 100.

Moreover, the above described process for setting the generation condition of the uncompleted viewing list can be applied to the streaming/non-streaming broadcast content. In this instance, an output of a real-time broadcast content can correspond to a play/output of the streaming broadcast content or a download of the non-streaming broadcast content.

Referring again to FIG. 4, in the generating step S430, the mobile terminal 100 automatically generates an uncompleted viewing list containing the uncompleted-viewed first broadcast content. Alternatively, the mobile terminal 100 can generate an uncompleted viewing list containing the uncompleted-viewed first broadcast content when receiving an input of a generation command signal from the user. In this instance, the generation command signal can be input at least one timing point from a timing point before an output of the first broadcast content, a timing point in the course of the output, and a timing point of an output interruption.

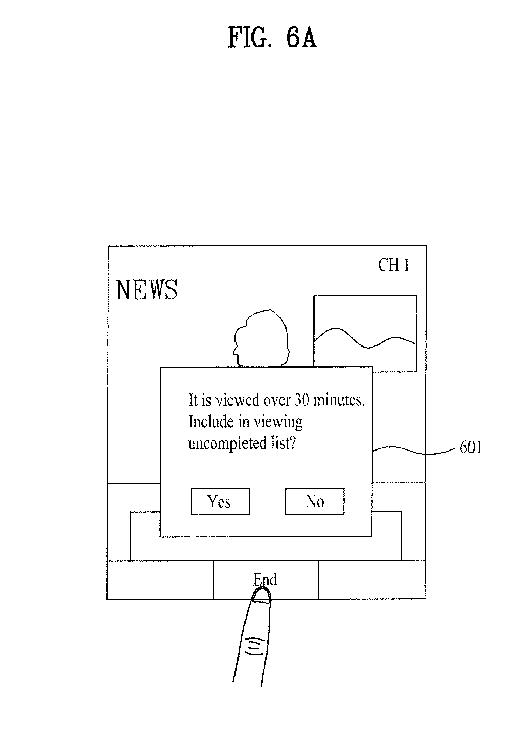

In the following description, a process for selecting whether to generate an uncompleted viewing list is explained with reference to the accompanying drawings. In more detail, FIGs. 6A to 6D are diagrams of screen configurations for selecting whether to generate an uncompleted viewing list if an output of a real-time broadcast content is interrupted according to an embodiment of the present invention.

Referring to FIG. 6A, when an uncompleted viewing list generation condition ('viewing over predetermined quantity' in FIG. 5A) is set to 'output over 30 minutes', and if an output interruption reason (e.g., an input of an output interruption command signal from the user) is generated at a random timing point after a 30-minute output of the first broadcast content, the mobile terminal 100 announces that the first broadcast content is output over 30 minutes and enables the user to select whether to have the first broadcast content included in an uncompleted viewing list.

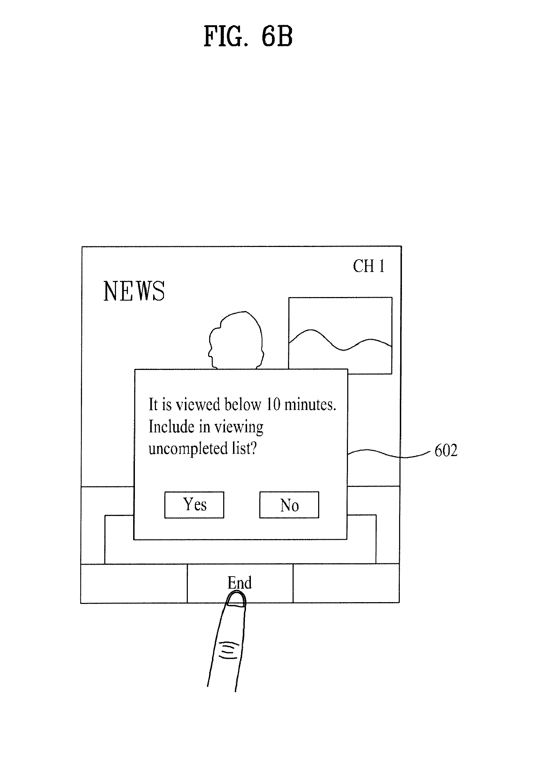

Referring to FIG. 6B, when an uncompleted viewing list generation condition ('viewing below predetermined quantity' in FIG. 5A) is set to 'output below 10 minutes', and if an output interruption reason is generated at a random timing point before a 10-minute output of a first broadcast content, the mobile terminal 100 announces that the first broadcast content is output for a period less than 10 minutes and enables the user to select whether to have the first broadcast content included in an uncompleted viewing list.

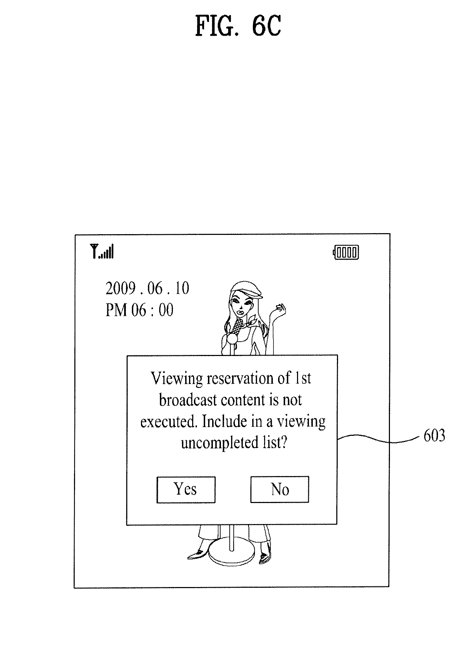

Referring to FIG. 6C, when an uncompleted viewing list generation condition is set to 'non-execution of viewing reservation'(see FIG. 5A), and if an viewing reservation of a first broadcast content is not executed, the mobile terminal 100 announces that the viewing reservation of the first broadcast content is not executed and enables the user to select whether to have the first broadcast content included in an uncompleted viewing list.

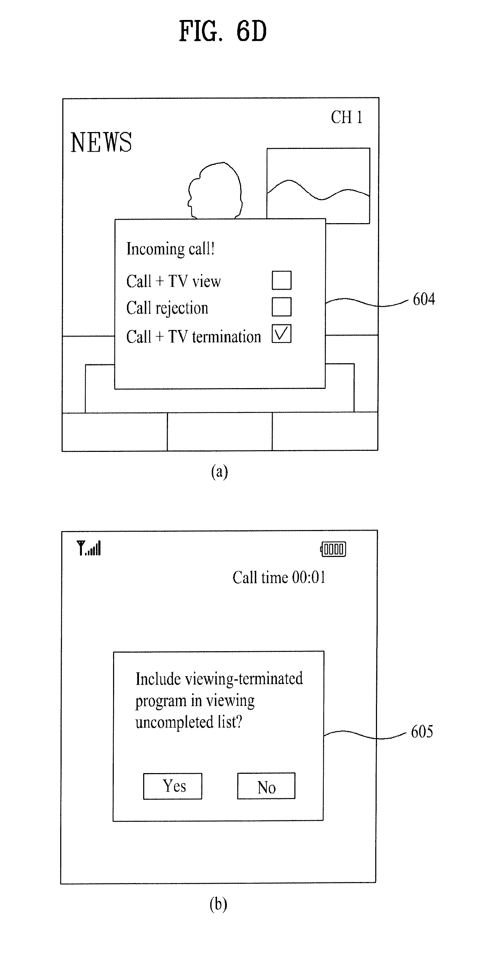

Referring to FIG. 6D, when an uncompleted viewing list generation condition is set to 'interruption due to application execution'(see FIG. 5A), and if the mobile terminal 100 receives a call signal while outputting the first broadcast content, the mobile terminal 100 enables the user to select one of a phone call & broadcast viewing, a call rejection and a phone call & broadcast end as shown in FIG. 6D(a).

If the user selects the call & broadcast end in FIG. 6D(a), the mobile terminal 100 interrupts an output of a first broadcast content, connects the received call signal, and is then able to perform a phone call as shown in FIG. 6D(b). In doing so, the mobile terminal 100 enables the user to select whether to have the output interrupted first broadcast content to be included in an uncompleted viewing list. If the user selects 'include in viewing uncompleted list (yes)' in one of FIGs. 6A to 6D, the mobile terminal 100 generates the uncompleted viewing list containing the first broadcast content.

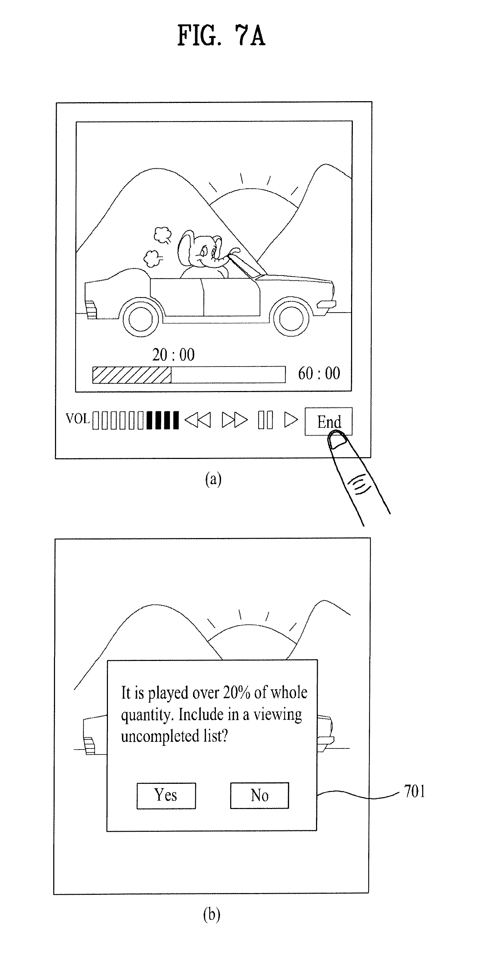

Next, FIGs. 7A to 7C are diagrams of screen configurations for selecting whether to generate an uncompleted viewing list if an output of a streaming broadcast content is interrupted according to an embodiment of the present invention. Referring to FIG. 7A, when an uncompleted viewing list generation condition ('viewing over predetermined quantity' in FIG. 5A) is set to 'play over 20%', and if an output interruption reason (e.g., an input of an output interruption command signal from the user) is generated at a random timing point after a 20% output of a first broadcast content as shown in FIG. 7A(a), the mobile terminal 100 announces that the first broadcast content is played back over 20% and enables the user to select whether to have the first broadcast content included in an uncompleted viewing list as shown in FIG. 7A(b).

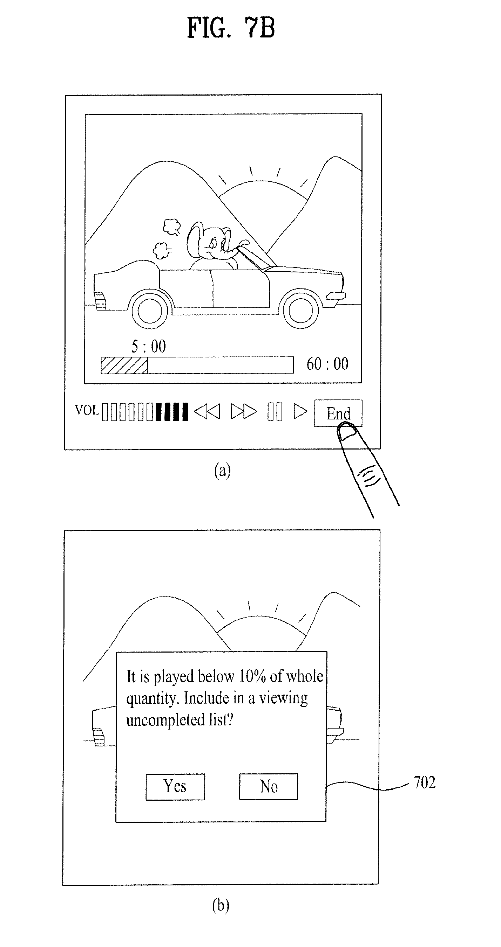

Referring to FIG. 7B, when an uncompleted viewing list generation condition ('viewing below predetermined quantity' in FIG. 5A) is set to 'play below 10%', and if an output interruption reason is generated at a random timing point before a 10% play of a first broadcast content as shown in FIG. 7B(a), the mobile terminal 100 announces that the first broadcast content is played less than 10% and enables the user to select whether to have the first broadcast content included in an uncompleted viewing list as shown in FIG. 7B(b).

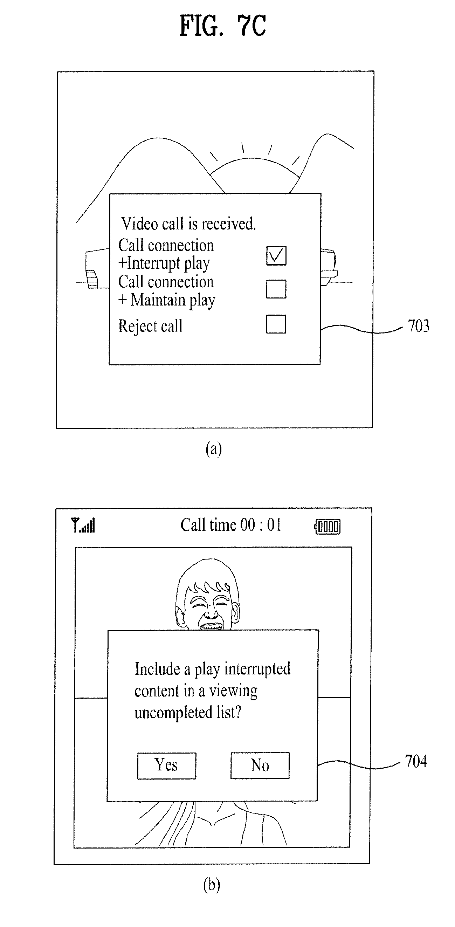

Referring to FIG. 7C, when an uncompleted viewing list generation condition is set to 'interruption due to application execution'(see FIG. 5A), and if the mobile terminal 100 receives a video call signal while playing a first broadcast content, the mobile terminal 100 enables the user to select one of a call connection & play stop, a call connection & play maintain, and a call rejection as shown in FIG. 7C(a). If the user selects the call connection & play stop in FIG. 7C(a), the mobile terminal 100 interrupts a download and play of a first broadcast content, connects the received video call signal, and then performs a video call as shown in FIG. 7C(b).

In doing so, the mobile terminal 100 enables the user to select whether to have the download & play interrupted first broadcast content to be included in a viewing uncompleted list. If the user selects 'include in viewing uncompleted list (yes)' in one of FIGs. 7A to 7C, the mobile terminal 100 generates the uncompleted viewing list containing the firs broadcast content.

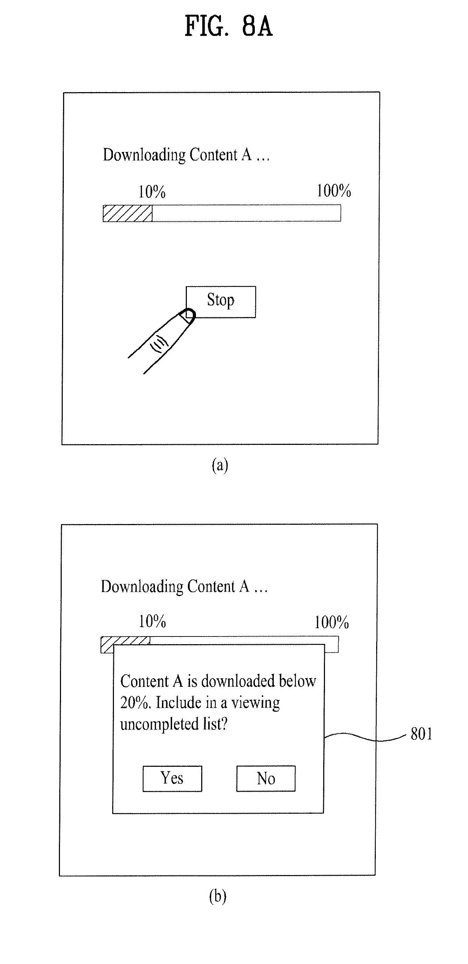

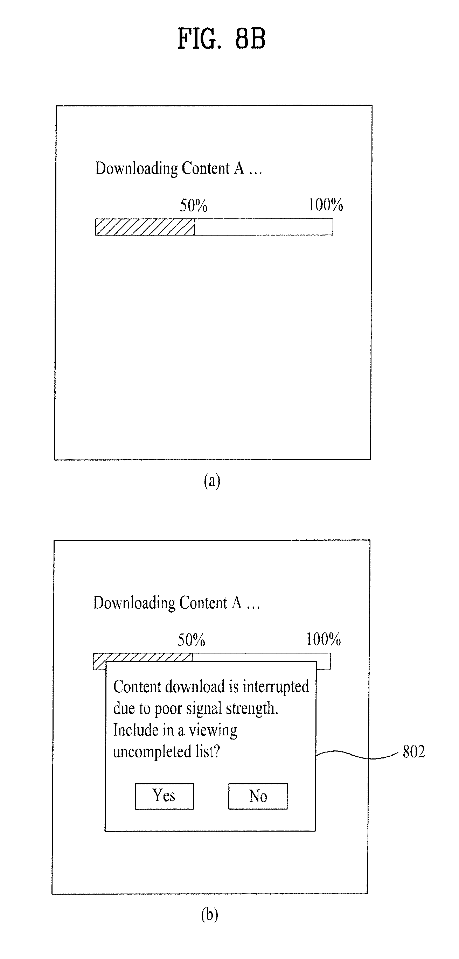

Next, FIGs. 8A and 8B are diagrams of screen configurations for selecting whether to generate an uncompleted viewing list if a download of a non-streaming broadcast content is interrupted according to an embodiment of the present invention. Referring to FIG. 8A, when an uncompleted viewing list generation condition ('viewing below predetermined quantity' in FIG. 5A) is set to 'play over 20%', and if an output interruption reason is generated at a random timing point before a 20% download of a first broadcast content as shown in FIG. 8A(a), the mobile terminal 100 announces that the first broadcast content is downloaded below 20% and enables the user to select whether to have the first broadcast content included in an uncompleted viewing list as shown in FIG. 8A(b). Of course, this applies to when the viewing uncompleted list generation condition is set to 'download over predetermined quantity'.

Referring to FIG. 8B, although an uncompleted viewing list generation condition is not separately set, if a content download is forced to be terminated due to a poor signal strength while downloading a first broadcast content as shown in FIG. 8B(a), the mobile terminal 100 informs the user of this forcible termination and enables the user to select whether to have the first broadcast content included in an uncompleted viewing list as shown in FIG. 8B(b). If 'include in viewing uncompleted list (yes)' is selected in FIGs. 8A or 8B, the mobile terminal 100 generates the uncompleted viewing list containing the first broadcast content.

Referring again to FIG. 4, under the control of the controller 180, the mobile terminal 100 displays the uncompleted viewing list generated in the generating step S430 via the display 151 (S440). In the uncompleted viewing list displayed in the displaying step S440, identification information (e.g., an identifier of a number/name/icon of a broadcast channel for providing a broadcast content, an identifier of title of a broadcast content, an identifier of a series number of a broadcast content, an identifier of a broadcast provided plural times, an identifier of an icon of a broadcast content, etc.) of a viewing uncompleted broadcast content can be included.

Moreover, in the uncompleted viewing list, output/play/download interruption point information (e.g., 2009.06.10. AM 10:00), broadcast time and date information of real-time broadcast content, downloadable time information of a streaming/non-streaming broadcast content and the like can be further included. Besides, the uncompleted viewing list is configured per content type or can be integratedly configured irrespective of a content type.

According to the user's input action via the user input unit 130, the controller 180 can edit the displayed uncompleted viewing list. For instance, the controller 180 deletes a specific uncompleted viewed broadcast content from the uncompleted viewing list or can modify (e.g., increase, decrease, shift, etc.) an uncompleted viewing section in the uncompleted viewing list.

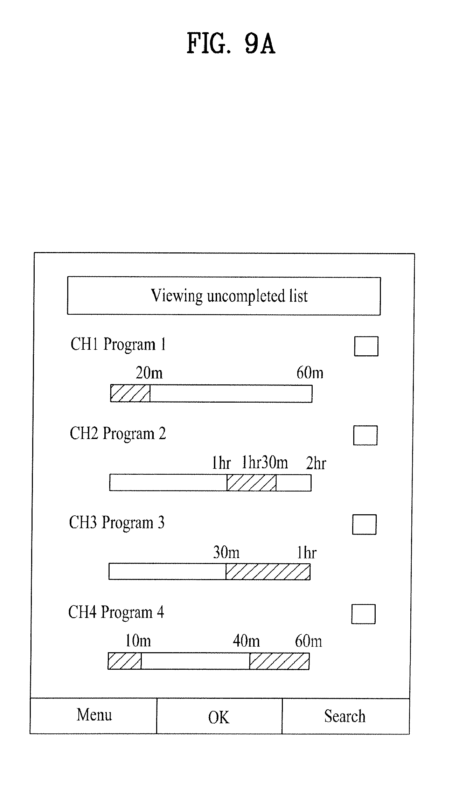

In the following description, the displaying step S440 is explained in more detail with reference to the accompanying drawings. For example, FIGs. 9A to 9C are diagrams of screen configurations of an uncompleted viewing list containing uncompleted viewed real-time broadcast contents according to an embodiment of the present invention.

Referring to FIG. 9A, the mobile terminal 100 displays a viewing uncompleted section using a time bar per broadcast content. In addition, the mobile terminal 100 can distinguishably display a portion corresponding to the viewing uncompleted section on a whole bar corresponding to a whole broadcast duration. For instance, a dark portion of time bar can indicate the viewing uncompleted section.

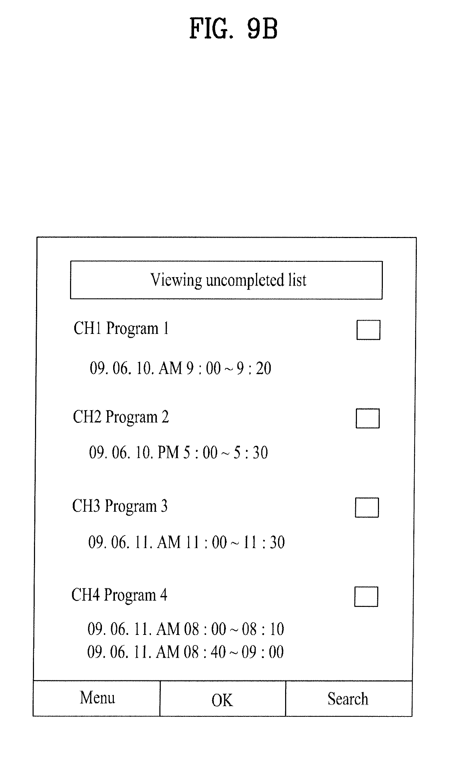

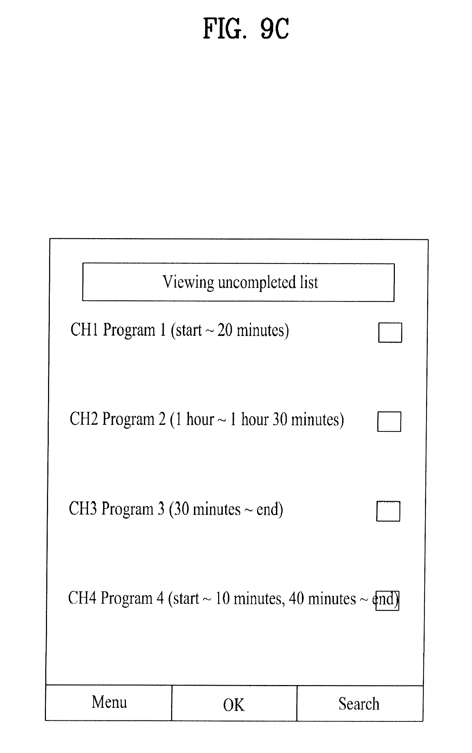

Referring to FIG. 9B, the mobile terminal 100 can display a time/date information corresponding to a viewing uncompleted section per broadcast content. Referring to FIG. 9C, the mobile terminal 100 can display a time corresponding to a viewing uncompleted section in a whole broadcast duration, in which a broadcast start point and a broadcast end point are included, with reference to the broadcast start point and the broadcast end point per broadcast content.

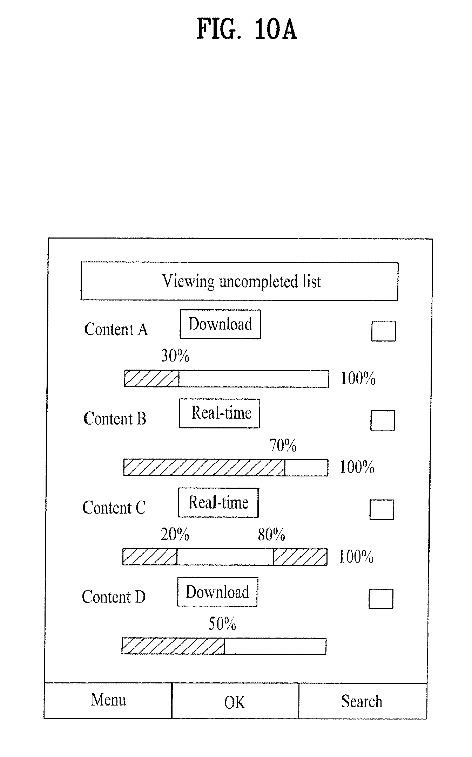

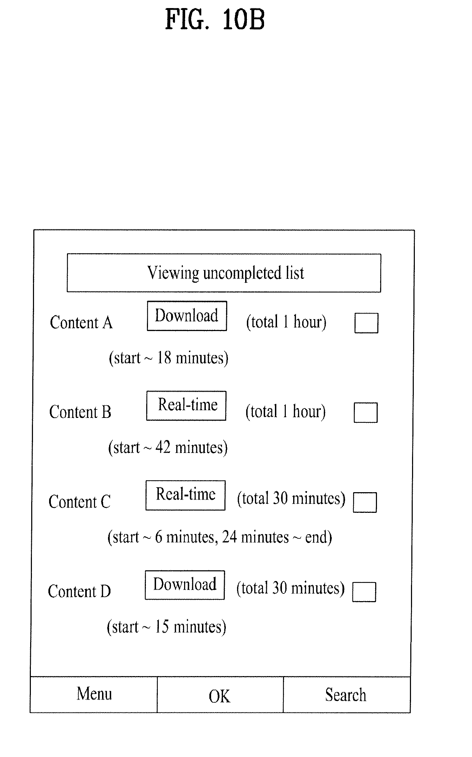

Next, FIGS. 10A and 10B are diagrams of screen configurations of an uncompleted viewing list containing uncompleted viewed streaming/non-streaming broadcast contents according to an embodiment of the present invention. Referring to FIG. 10A, the mobile terminal 100 displays a viewing uncompleted section using a time bar per broadcast content.

When a broadcast content is a non-streaming content (represented as 'download'), the mobile terminal 100 distinguishably displays a download uncompleted section (corresponding to the viewing uncompleted section) of a whole quantity. Also, when a broadcast content is a streaming content (represented as 'real time'), the mobile terminal 100 distinguishably displays a download & play uncompleted section (corresponding to the viewing uncompleted section) of a whole quantity. For instance, a white portion can indicate the viewing uncompleted section.

Referring to FIG. 10B, with reference to a start point and an end point per broadcast content, the mobile terminal 100 can display a download completed portion (for non-streaming) of a whole quantity of a broadcast content or a download and play completed portion (for streaming). In this instance, the whole quantity and the download completed portion (for streaming) can be represented as a percentage (%) (the whole quantity is equal to 100 %) or a time (the whole quantity is equal to consumed time_non-streaming or whole play time_streaming). On the contrary, the mobile terminal 100 can display a download uncompleted portion or a download & play uncompleted portion.

Meanwhile, the mobile terminal 100 generates an uncompleted viewing list, on which real-time broadcast content, streaming broadcast content and non-streaming broadcast content are integrated) and then can display the uncompleted viewing list.

Referring again to FIG. 4, under the control of the controller 180, the mobile terminal 100 searches a second broadcast content identical to the first broadcast content contained in the uncompleted viewing list generated in the generating step S430 using the broadcast relevant information (S450). In this instance, the broadcast relevant information is separately provided per broadcast content type or can be integratedly provided irrespective of the broadcast content type. Further, the broadcast relevant information is provided according to a terminal request or can be provided at a random timing point designated by a broadcast relevant information providing server.

In addition, the broadcast relevant information can include identification information per broadcast content or link information per broadcast content. In this instance, the link information corresponds to the information indicating that first and second broadcast contents are identical to each other even if identification information of the first broadcast content is different from that of the second broadcast content.

The controller 180 can then perform the searching step S450 at least one timing point from the user selected timing point, a random timing point, a timing point of generating an uncompleted viewing list containing the first broadcast content, and a broadcast relevant information updated timing point.

When a plurality of uncompleted viewed broadcast contents are included in the uncompleted viewing list, the mobile terminal 100 can search a broadcast content identical to a specific uncompleted viewed broadcast content selected by the user via the user input unit 130. Further, in the searching step S450, if the first broadcast content is a real-time/streaming/non-streaming broadcast content, the mobile terminal 100 can search a plurality of real-time/streaming/non-streaming broadcast contents for an identical broadcast content.

Moreover, when the first broadcast content is a first broadcast content type (e.g., a real-time content), the controller 180 searches a broadcast content having the first broadcast content type designated thereto (first search). If the first search fails, the controller 180 can search a broadcast content to which a second broadcast content type (e.g., a streaming content, a non-streaming content, etc.) is designated (second search).

According to the search for the second broadcast content identical to the first broadcast content, the mobile terminal 100 can distinguishably display a success or failure in searching the first broadcast content on the viewing uncompleted list. For instance, the mobile terminal 100 can distinguishably display the success or the failure using a text (e.g., search success, search failure), an icon, an image, a letter color, a background image color, a font and/or the like. Moreover, a presence or non-presence of execution of the search process can be distinguishably displayed per broadcast content on the viewing uncompleted list.

In the following description, a method of recognizing a second broadcast content identical to a first broadcast content is explained in more detail. First, the controller 180 can recognize a broadcast content, for which identification information equal to identification information (e.g., content ID, content title, content ID number, etc.) of a first broadcast content is set, as a second broadcast content identical to the first broadcast content using per-broadcast content identification information contained in broadcast relevant information.

Alternatively, the controller 180 can recognize a linked broadcast content indicated by link information of a first broadcast content as a second broadcast content identical to the first broadcast content using per-broadcast content identification information and link information contained in broadcast relevant information.

In addition, with reference to FIG. 4, when the search for the second broadcast content identical to the first broadcast content is successful in the searching step S450, the mobile terminal 100 receives an input of an output command signal for a viewing uncompleted section of the first broadcast content from the user via the user input unit (S460).

Also, when receiving the input of the output command signal in the inputting step S460, the mobile terminal can recognize a portion corresponding to the viewing uncompleted section of the first broadcast content in the searched second broadcast content under the control of the controller 180. For instance, when the first broadcast content is a real-time broadcast content, and if a viewing uncompleted section ranges to 20 minutes from a broadcast start point, the controller 180 can recognize a portion of the second broadcast content amounting to 20 minutes from the broadcast start point as the viewing uncompleted section.

In another instance, when the first broadcast content is a streaming broadcast content, and if a viewing uncompleted section ranges from a play extent 50% point to an end point, the controller 180 can recognize a portion ranging from a 50% point of a whole quantity of the second broadcast content to an end point as the viewing uncompleted section. In still another instance, when the first broadcast content is a non-streaming broadcast content, and if a viewing uncompleted section ranges from a download extent 30% point to an end point, the controller 180 can recognize a portion ranging from a 30% point of a whole quantity of the second broadcast content to an end point as the viewing uncompleted section.

Subsequently, under the control of the controller 180, the mobile terminal 100 outputs the recognized viewing uncompleted section portion of the first broadcast content via the output unit 150 (S470). For instance, when the second broadcast content is a real-time broadcast content, the controller 180 receives the portion of the second broadcast content corresponding to the viewing uncompleted section portion in the broadcast duration of the second broadcast content via the wireless communication unit 110, and more particularly, via the broadcast receiving module 111 and can then output the received portion.

In another instance, when the second broadcast content is a streaming broadcast content, the controller 180 can download and play back the portion of the second broadcast content corresponding to the viewing uncompleted section portion via the wireless communication unit 110, and more particularly, via the wireless internet module 113.

In still another instance, when the second broadcast content is a non-streaming broadcast content, the controller 180 downloads the portion of the second broadcast content corresponding to the viewing uncompleted section portion via the wireless communication unit 110, and more particularly, via the wireless internet module 113. After the download has been completed, the controller 180 can play the downloaded portion.

Moreover, the controller 180 receives or downloads the second broadcast content via the wireless communication unit 110, recognizes a viewing uncompleted section portion of the received second broadcast content, and is then able to output the recognized viewing uncompleted portion.

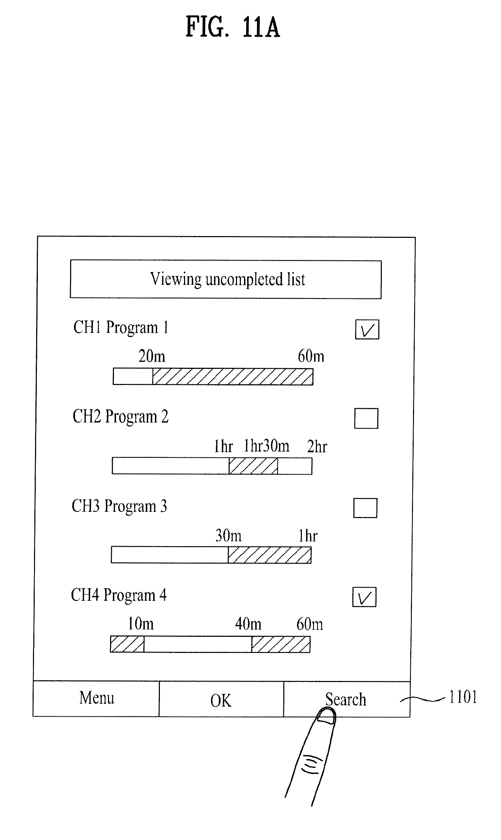

In the following description, a process for searching and outputting a broadcast content is explained in more detail with reference to the accompanying drawings. First, a case of a real-time broadcast content will be explained. In more detail, FIGs. 11A to 11D are diagrams of screen configurations of a process for searching a viewing uncompleted real-time broadcast content using a real-time broadcast content uncompleted viewing list according to an embodiment of the present invention.

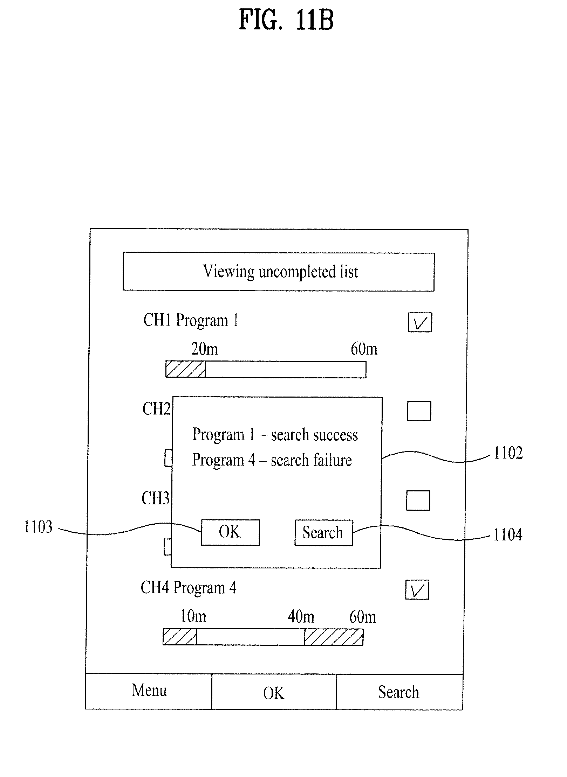

Referring to FIG. 11A, the mobile terminal 100 receives a selection signal for an uncompleted viewed broadcast content to search and a search request signal using an uncompleted viewing list of real-time broadcast contents. Referring to FIG. 11 B, the mobile terminal searches an identical broadcast content for each of the first and fourth programs corresponding to the received uncompleted viewed real-time broadcast content selection signal and is then able to display a search result information 1102 on the screen.

For instance, if the user selects 'OK' 1103 from the search result information 1102, the controller 180 reflects the search result of the first and fourth programs on the uncompleted viewing list. If the user selects 'search again' 1104 from the search result information 11102, the controller 180 can perform a re-search for the search-failure fourth program.

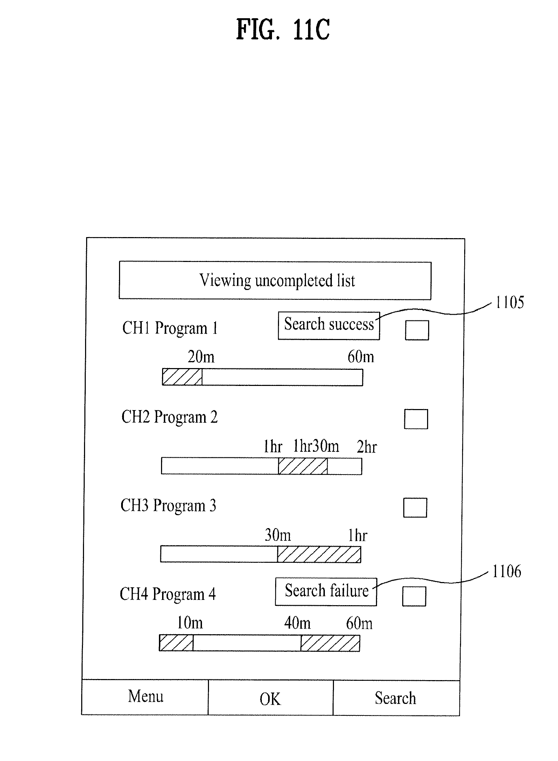

The mobile terminal 100 then reflects the search result of the first and second programs on the viewing uncompleted list and can display an identifier (search success via text) 1105 indicating the search success for the search-successful first program and an identifier (search failure via text) 1106 indicating a search failure for the search-failing fourth program on the viewing uncompleted list as shown in FIG. 11C.

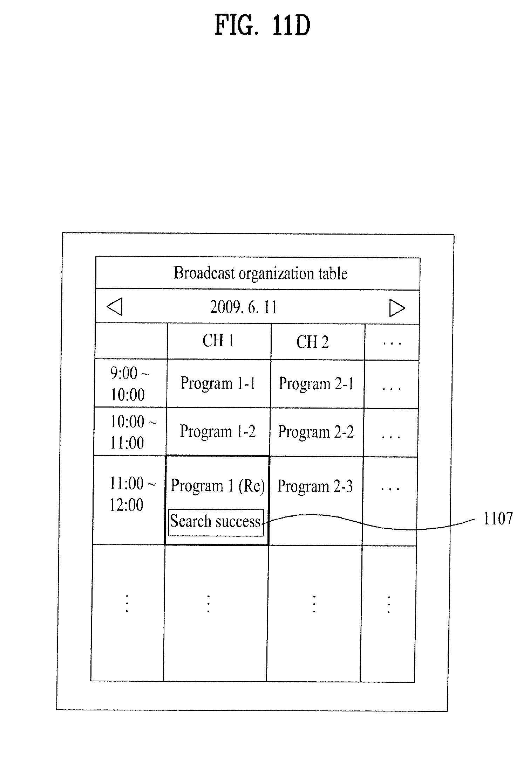

Moreover, the mobile terminal 100 can distinguishably display a program {first program (re-broadcast)} 1107 identical to the search successful first program on a broadcast organization table as shown in FIG. 11D. Meanwhile, the controller 180 can provide an uncompleted viewing list sorted with reference to search success, search failure, search execution, search non-execution and the like.

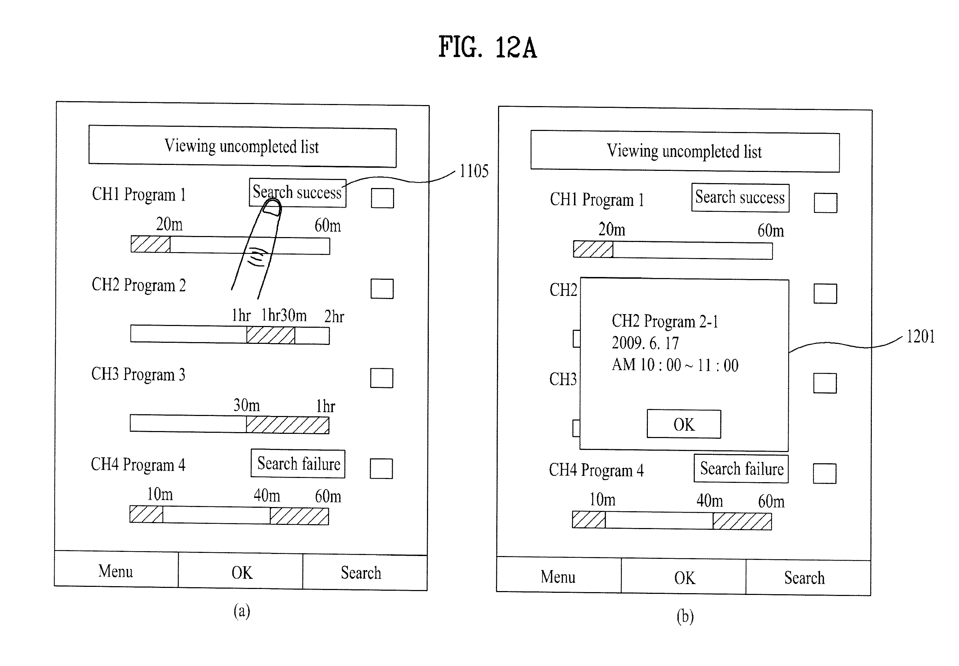

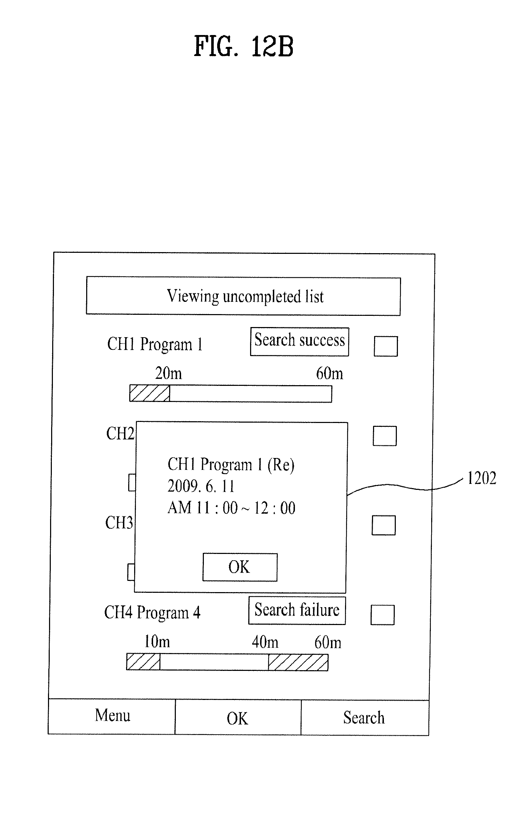

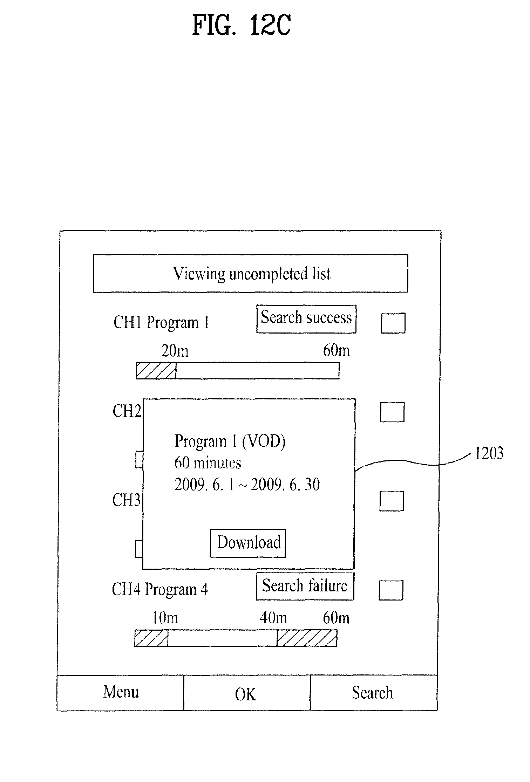

Next, FIGs. 12A to 12C are diagrams of screen configurations for displaying a search result of uncompleted viewed real-time broadcast contents according to an embodiment of the present invention. First, when receiving an input of a search result provide command signal for a search-successful first program {select a search success 1105} (see FIG. 12A), the mobile terminal 100 can display information on a program identical to the first program on the screen (see FIGs. 12B and 12C]. If the program identical to the first program is a real-time content, the identical program information can contain program providing channel information, program title, program broadcast time/date and the like (see FIG. 12B). If the program identical to the first program is a streaming content, the identical program information can contain a program title, a program download consumed time, a program downloadable period and the like (see FIG. 12C).

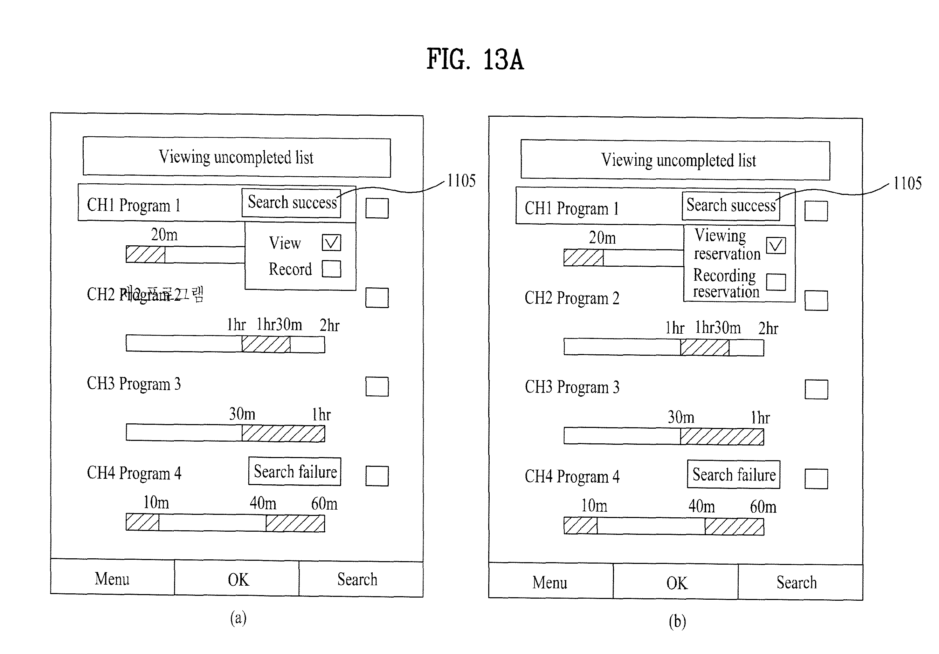

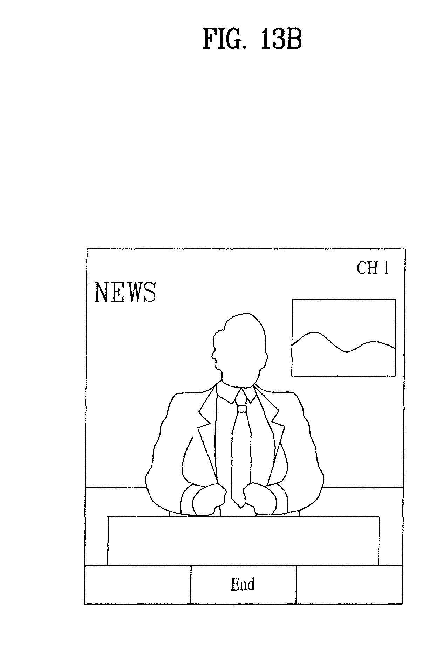

Next, FIGs. 13A and 13B are diagrams of screen configurations for outputting a search-successful uncompleted viewed real-time broadcast content according to an embodiment of the present invention. First, when receiving an input of an output command signal for a search-successful first program from the user, the mobile terminal 100 enables the user to select 'view' or 'record' if the first program is currently viewable (see FIG. 13A(a)). If the first program is viewable in the future, the mobile terminal 100 enables the user to select 'viewing reservation' or 'recording reservation' (see FIG. 13A(b)). For instance, if the 'view' option is selected in FIG. 13A(a), the mobile terminal 100 can output a portion of the program (e.g., program 2-1) identical to the first program corresponding to a viewing uncompleted section (see FIG. 13B).

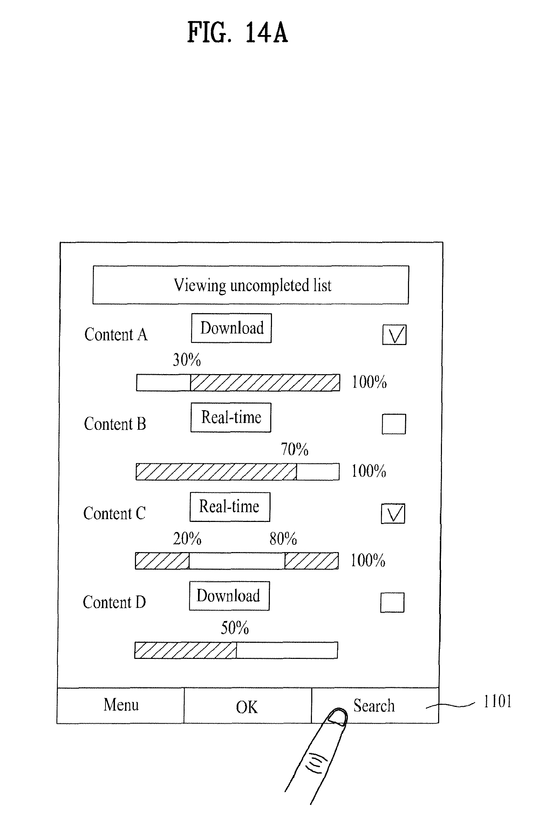

The following description explains the case of streaming/non-streaming broadcast content. In more detail, FiGs. 14A to 14C are diagrams of screen configurations of a process for searching an uncompleted viewed streaming/non-streaming broadcast content using a streaminginon-streaming broadcast content uncompleted viewing list according to an embodiment of the present invention.

First, the mobile terminal 100 can receive a selection signal for an uncompleted viewed streaming/non-streaming broadcast content to search and a search request signal from the user using an uncompleted viewing list of streaming/non-streaming broadcast contents (see FIG. 14A).

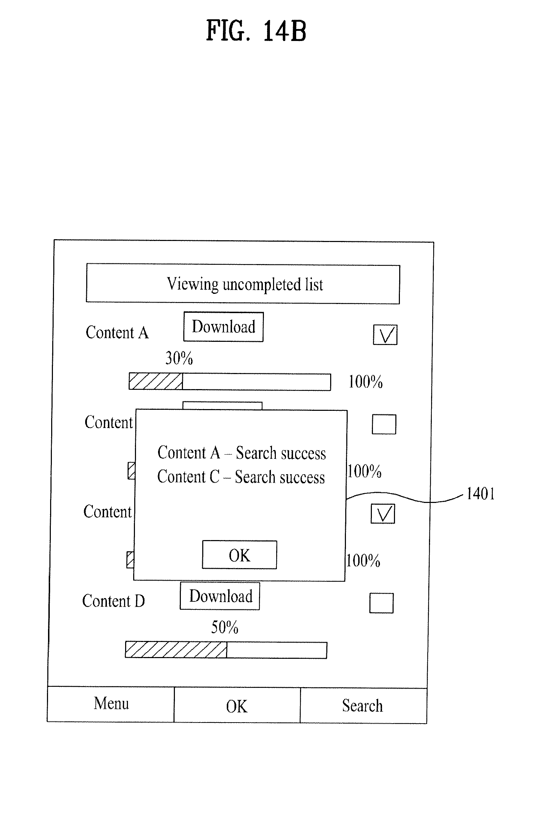

Subsequently, the mobile terminal 100 searches broadcast contents identical to a content A and a content C corresponding to the received uncompleted viewed streaming/non-streaming broadcast content selection signal and is then able to display a search result information 1401 on the screen (see FIG. 14B).

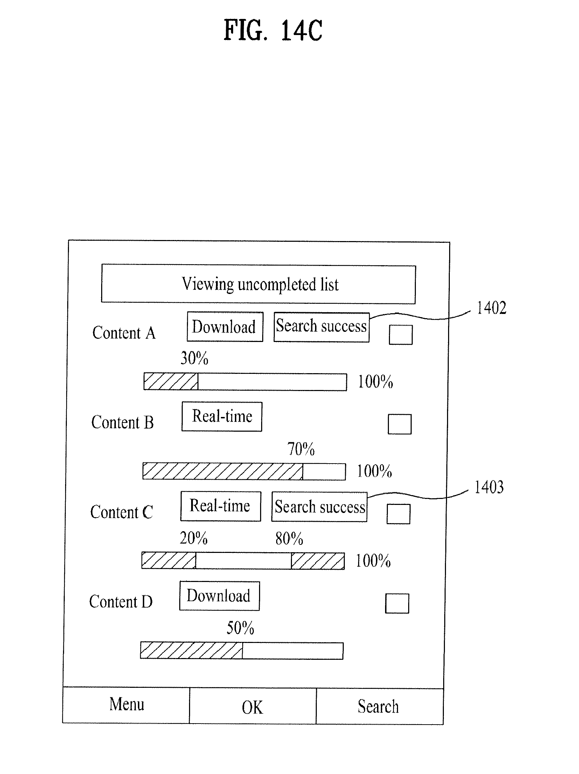

The mobile terminal 100 reflects the search result of the content A and the content C on the viewing uncompleted list and is then able to display an identifier (search success via text) 1402 indicating the search success for the search-successful content A and an identifier (search success via text) 1403 indicating a search success for the search-successful content C on the viewing uncompleted list (see FIG. 14C). Meanwhile, the controller 180 can provide an uncompleted viewing list sorted with reference to search success, search failure, search execution, search non-execution and the like.

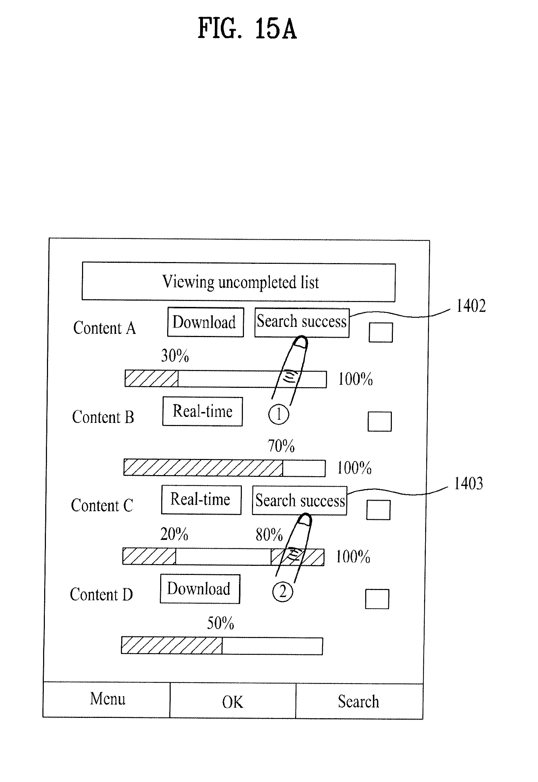

Next, FIGs. 15A to 15C are diagrams of screen configurations for displaying a search result of an uncompleted viewed streaming/non-streaming broadcast content according to an embodiment of the present invention.

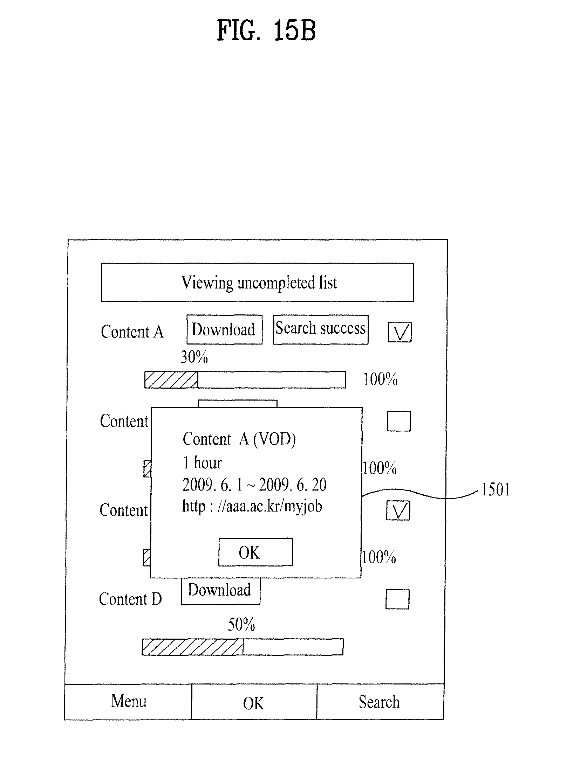

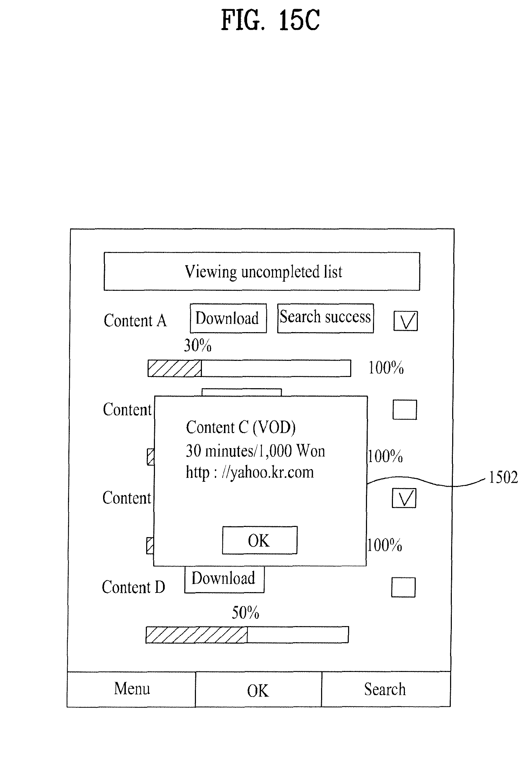

First, when receiving an input of a search result providing command signal for a search successful content A {select 'search success' 1402} (see FIG. 15A), the mobile terminal 100 displays information on a broadcast content identical to the content A on the screen (see FIG. 15B). When receiving an input of a search result providing command signal for a search successful content C {select 'search success' 1403} (see FIG. 15A), the mobile terminal 100 displays information on a broadcast content identical to the content C on the screen (see FIG. 15C).

In this instance, the identical broadcast content information can contain a broadcast content title, a download consumed time or play time, pay/free indication, price in case of pay, a downloadable period information, a download providing web site address and the like.

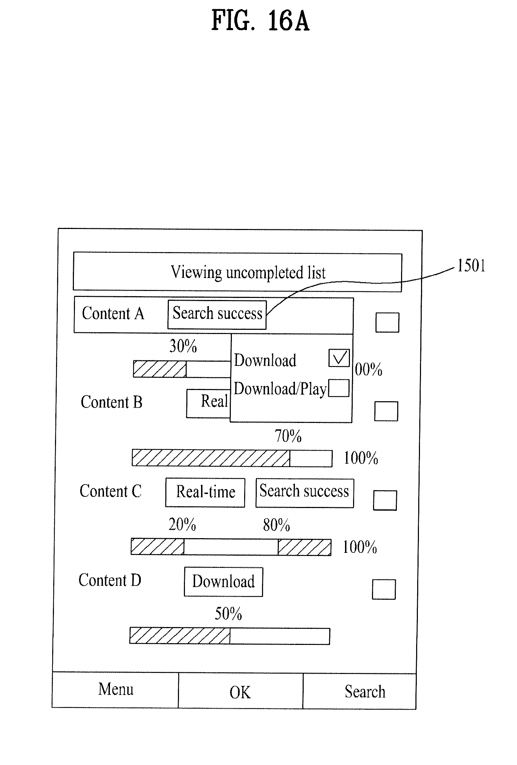

Next, FIGs. 16A to 16C are diagrams of screen configurations for outputting a search-successful uncompleted viewed streaming/non-streaming broadcast content according to an embodiment of the present invention. First, when receiving an input of a download command signal for a search successful content A (if a content A is a non-streaming content) (if the content A is a streaming content, a download & play command signal is input) from the user, the mobile terminal 100 enables the user to select 'download' or 'download/play' (see FIG.16A).

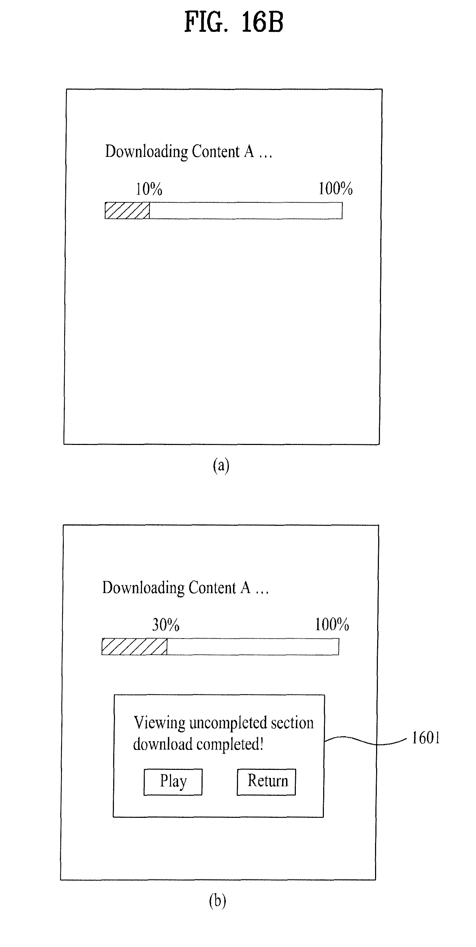

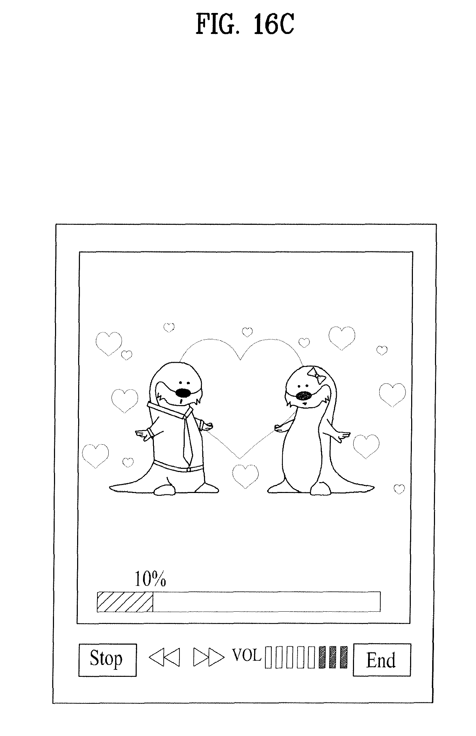

If the download is selected in FIG. 16A, the mobile terminal 100 downloads a portion corresponding to a download uncompleted portion of a broadcast content identical to the content A. If the portion corresponding to the download uncompleted portion is completed, the mobile terminal 100 can inform the user of the download completion (see FIG. 16B). If the play is selected in FIG. 16B(b), the mobile terminal 100 can play and output the portion corresponding to the download uncompleted portion (see FIG. 16C).

Meanwhile, after the download/play has been selected in FIG. 16A, and if a download of the portion corresponding to the download uncompleted portion is completed, the mobile terminal 100 can play and output the portion corresponding to the download uncompleted portion automatically without the user selection action.

Further, if a viewing uncompleted section portion of a first broadcast content is completely output (real-time), downloaded & played (streaming) or downloaded (non-streaming), the mobile terminal 100 can delete the first broadcast content from the uncompleted viewing list. In this instance, when receiving an input of a delete command signal from the user or detecting an output/download & play/download completion, the controller 180 can perform the deleting process.

According to an embodiment of the present invention, under the control of the controller 180, the mobile terminal 100 transmits a search request signal for a broadcast content identical to a viewing uncompleted broadcast content to an IPTV terminal and can receive a search result from the IPTV terminal. In this instance, assume that the IPTV terminal is capable of performing the searching process in the above-mentioned manner.

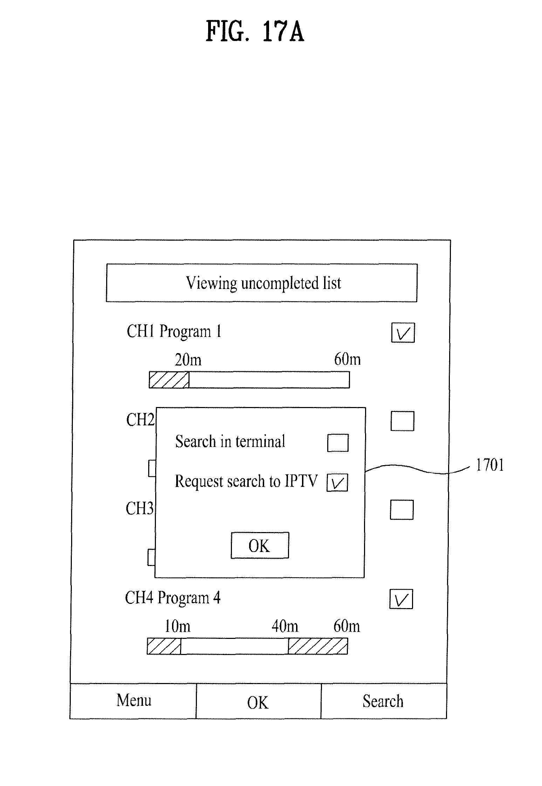

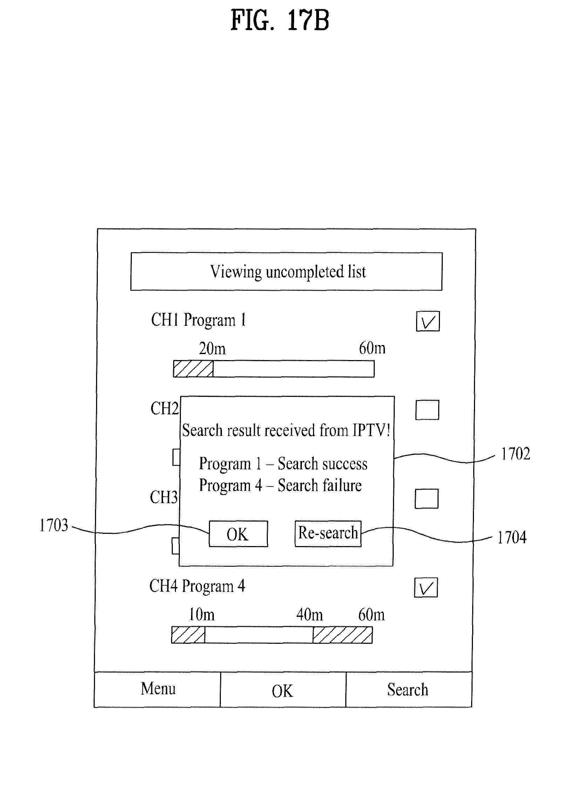

The mobile terminal 100 also reflects the received search result on the viewing uncompleted list and is then able to distinguishably display it according to success or failure. For example, referring to FIGs. 17A and 17B, when receiving an input of a search request for an uncompleted viewed broadcast content to the IPTV terminal from the user (see FIG. 17A), the mobile terminal 100 can transmit a search request signal for a broadcast content identical to the uncompleted viewed broadcast content to the IPTV terminal.

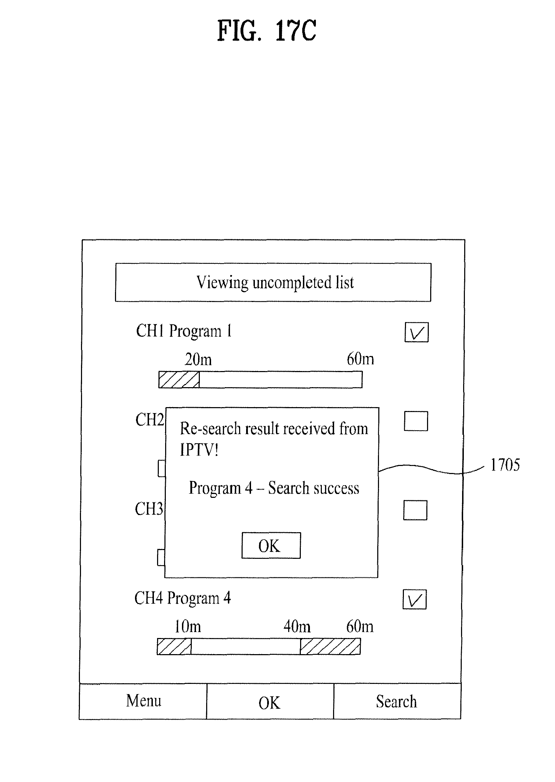

Subsequently, the mobile terminal 100 can display a search result information received from the IPTV terminal on the screen (see FIG. 17B). Moreover, the mobile terminal 100 makes a request for a re-search for a search-failing broadcast content to the IPTV terminal and can receive a re-search result (see Fig. 17C).

When receiving an input of an output command signal for a search successful first broadcast content, the mobile terminal 100 can transmit a signal of requesting a second broadcast content identical to the first broadcast content or a portion corresponding to a viewing uncompleted section of the second broadcast content to the IPTV terminal. Therefore, when receiving the second broadcast content from the IPTV terminal, the mobile terminal 100 can identify and output the portion corresponding to the viewing uncompleted section of the second broadcast content. Also, when receiving the portion corresponding to the viewing uncompleted section from the IPTV terminal, the mobile terminal 100 can directly output the received portion.

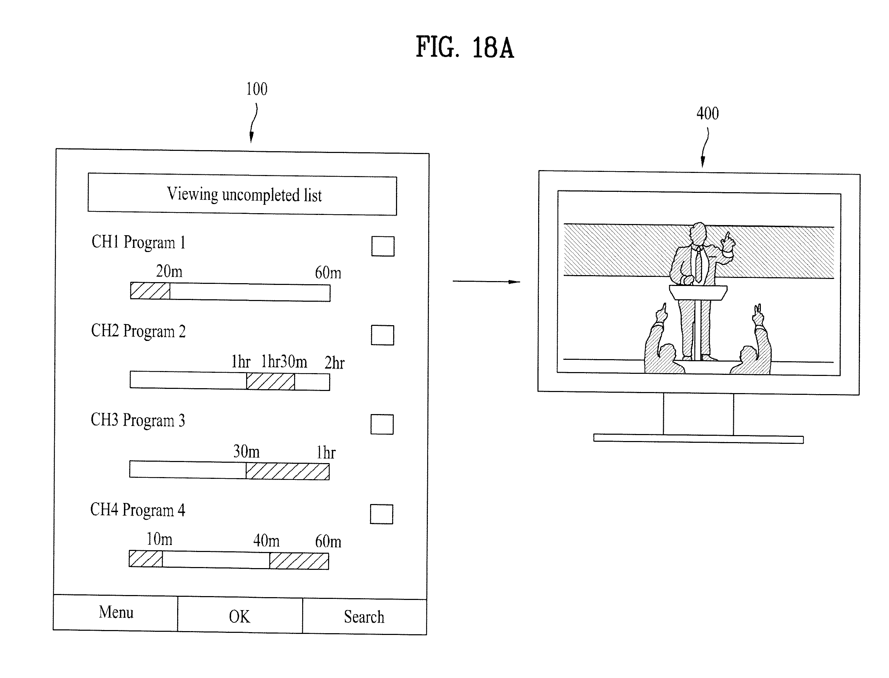

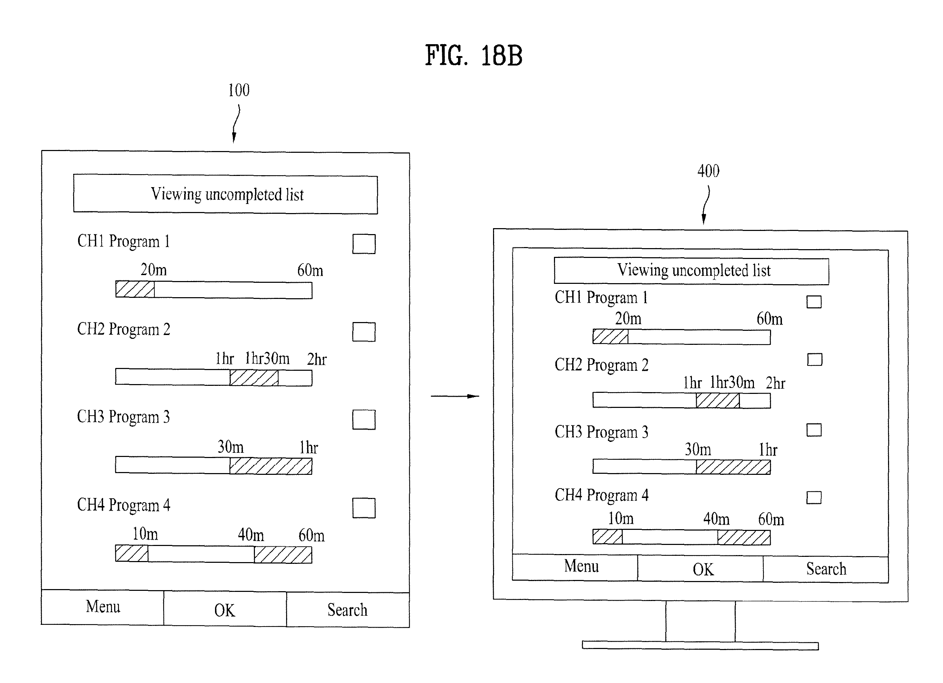

According to an embodiment of the present invention, the mobile terminal 100 searches a broadcast content identical to a viewing uncompleted broadcast content contained in an uncompleted viewing list using an IPTV terminal 400. According to the search result, the mobile terminal 100 can output a viewing uncompleted section portion using the IPTV terminal 400 (see FIG. 18A). Moreover, the mobile terminal 100 can share the viewing uncompleted list with the IPTV terminal 400 (see FIG. 18B).

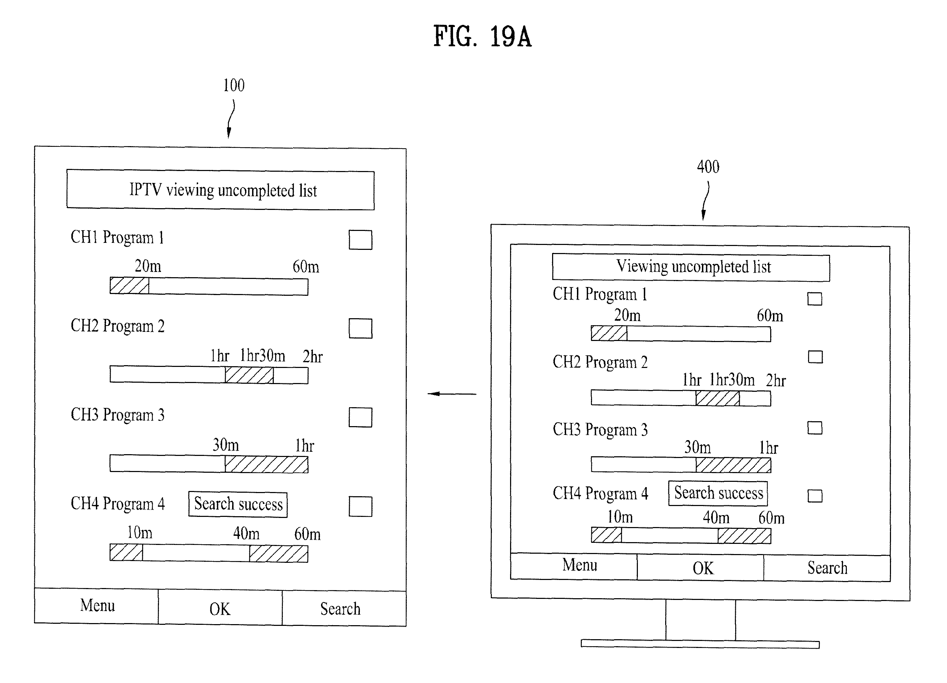

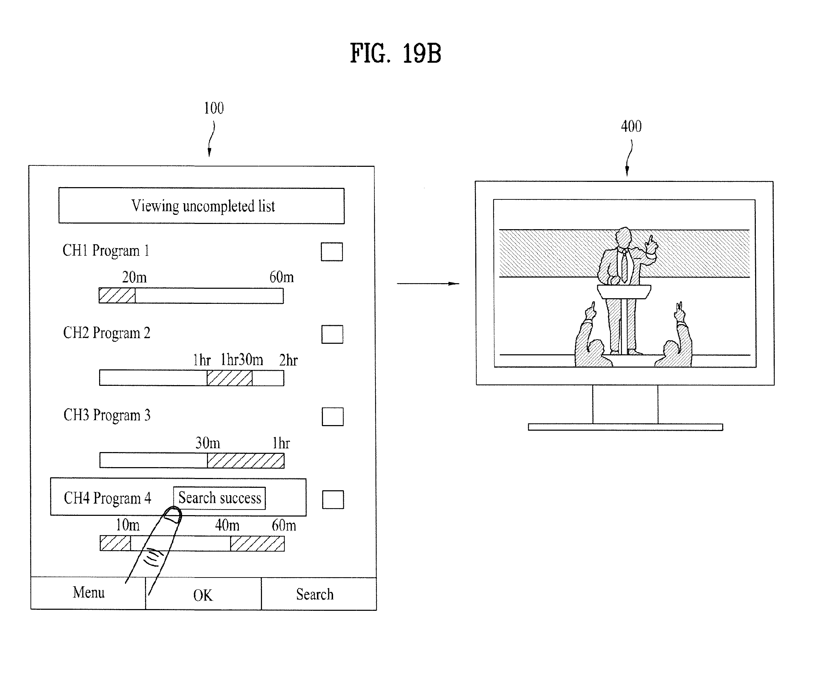

Furthermore, the above-described embodiments of the present invention can be implemented by the IPTV terminal. If so, the mobile terminal 100 receives the viewing uncompleted list from the IPTV terminal 400 and then shares the received viewing uncompleted list with the IPTV terminal 400. In addition, the mobile terminal 100 can control the IPTV terminal 400 to output a portion corresponding to a viewing uncompleted section of a specific viewing uncompleted broadcast content using the shared uncompleted viewing list (see FiGs. 19A and 19B).

According to one embodiment of the present invention, the above-described broadcast controlling methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet).

Accordingly, the present invention provides several advantages. First, when an uncompleted viewed broadcast content exists, the present invention generates and outputs an uncompleted viewing list containing the uncompleted viewed broadcast content. Secondly, the present invention can search a broadcast content identical to an uncompleted viewed broadcast content, thereby outputting a portion corresponding to a viewing uncompleted section of the searched broadcast content. Therefore, the user can finish the viewing of the uncompleted viewed broadcast content.

In addition, when a broadcast output is interrupted before completion of a corresponding broadcast program, information on the output interrupted broadcast program is provided. Thus, the present invention meets the needs of the user who intends to continue viewing the viewing-interrupted broadcast program.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A mobile terminal (100) comprising:
a wireless communication unit (110) configured to receive a first broadcast content;
an output unit (150) configured to output the received first broadcast content; and
a control unit (180) configured to determine that a viewing of the first broadcast content has not been completed, to generate an uncompleted viewing list including at least an identification information identifying the first broadcast content and viewing uncompleted section information identifying a section of the first broadcast content that has not been viewed, and to control the output unit to display the uncompleted viewing list.

2. The mobile terminal of claim 1, wherein the control unit is further configured to determine that the viewing of the first broadcast content has not been completed in least one instance of 1) when a predetermined quantity or more of an entire portion of the first broadcast content has been output, 2) when a predetermined quantity or less of the entire portion of the first broadcast content has been output, 3) when a viewing reservation set for the first broadcast content is not executed, and 4) when output of the first broadcast content is interrupted while outputting the first broadcast content due to an execution of another application.

3. The mobile terminal of any of claims 1 and 2, wherein the viewing uncompleted section information includes at least one of 1) a section information ranging from a broadcast start point of the first broadcast content to an output start point of the first broadcast content, 2) a section information ranging from an output end point of the first broadcast content to a broadcast end point of the first broadcast content, and 3) a section information ranging from a first output end point of the first broadcast content to a second output start point of the first broadcast content.

4. The mobile terminal of any of claims 1-3, wherein the control unit is further configured to generate the uncompleted viewing list when the first broadcast content meets a condition corresponding to at least one of a genre, a broadcast time zone, a viewable age option, a pay/free option, and a broadcast channel.

5. The mobile terminal of any of claims 1-4, wherein when the control unit determines the viewing of the first broadcast content has not been completed, the control unit is further configured to search for a second broadcast content identical to the first broadcast content using broadcast relevant information.

6. The mobile terminal of claim 5, wherein when the search for the second broadcast content is successful, the control unit is further configured to control the output unit to distinguishably display the first broadcast content in the uncompleted viewing list from other uncompleted viewed broadcast content including in the uncompleted viewing list.

7. The mobile terminal of any of claims 5 and 6, further comprising:
an user input unit (130) configured to receive an output command signal requesting the uncompleted viewed section of the first broadcast content be output,
wherein the control unit is further configured to extract a quantity corresponding to the uncompleted viewed section from the searched second broadcast content and to control the output unit to output the extracted quantity of the second broadcast content based on the received output command signal.

8. The mobile terminal of claim 7, wherein when the output unit completes outputting the extracted quantity corresponding to the uncompleted viewed section, the control unit is further configured to delete the first broadcast content from the uncompleted viewing list.

9. The mobile terminal of any of claims 5-8, wherein when searching for the second broadcast content, the control unit is further configured to search broadcast contents having a content type of the first broadcast content designated thereto for the second broadcast content, and
wherein when the search fails, the control unit is further configured to search broadcast contents having a content type different from that of the first broadcast content designated thereto for the second broadcast content.

10. The mobile terminal of any of claims 5-9, wherein the control unit is further configured to search for the second broadcast content at a timing point corresponding to at least one of a generation of the uncompleted viewing list, an update of the broadcast relevant information, and an input of a search request signal.

11. The mobile terminal of any of claims 1-10, wherein when the control unit determines the viewing of the first broadcast content has not been completed, the control unit is further configured to control the wireless communication unit to transmit a search request signal for a second broadcast content identical to the first broadcast content to an Internet protocol television terminal and to receive a search result for the second broadcast content identical to the first broadcast content from the Internet protocol television terminal.

12. The mobile terminal of claim 11, wherein the control unit is further configured to control the output unit to distinguishably display the search result received with the first broadcast content on the uncompleted viewing list.

13. A method of controlling a mobile terminal (100), the method comprising:
receiving, via a wireless communication unit (110) on the mobile terminal, a first broadcast content;
outputting, via an output unit (150) on the mobile terminal, the received first broadcast content;
determining (S410), via a control unit (180) on the mobile terminal, that a viewing of the first broadcast content has not been completed;
generating (S430), via the control unit, an uncompleted viewing list including at least an identification information identifying the first broadcast content and viewing uncompleted section information identifying a section of the first broadcast content that has not been viewed; and
displaying (S440), via the output unit, the uncompleted viewing list.

14. The method of claim 13, wherein when the determining step determines the viewing of the first broadcast content has not been completed, the method further comprises searching, via the control unit, for a second broadcast content identical to the first broadcast content using broadcast relevant information.

15. The method of any of claims 13 and 14, wherein when the determining step determines the viewing of the first broadcast content has not been completed, the method further comprises transmitting, via the wireless communication unit, a search request signal for a second broadcast content identical to the first broadcast content to an Internet protocol television terminal and receiving a search result for the second broadcast content identical to the first broadcast content from the Internet protocol television terminal, and
wherein the method further comprises distinguishably displaying, via the output unit, the search result received with the first broadcast content on the uncompleted viewing list.
